# EUROPEAN PATENT APPLICATION

(11) **EP 4 520 166 A2**
(43) Date of publication of application: **12.03.2025**
(21) Application number: 24198590.2
(22) Date of filing: 05.09.2024
(51) Int. Cl.: A01G 20/47, F04D 29/58, F04D 25/08

(54) **BLOWER APPARATUS**

(30) Priority: 07.09.2023 CN 202311147862; 07.09.2023 CN 202322434582 U; 27.12.2023 CN 202311820934; 27.12.2023 CN 202311829361; 27.12.2023 CN 202323610984 U; 27.12.2023 CN 202323611185 U; 01.07.2024 CN 202421539870 U; 01.07.2024 CN 202421552908 U
(71) Applicant: Greenworks (Jiangsu) Co., Ltd., Changzhou, Jiangsu 213023 (CN)
(72) Inventor: TANG, Yabin, Changzhou, 213023 (CN); XU, Pengqing, Changzhou, 213023 (CN); SHANGGUAN, Yunjie, Changzhou, 213023 (CN); YANG, Xudong, Changzhou, 213023 (CN); LI, Xiazi, Changzhou, 213023 (CN)
(74) Representative: Bergenstråhle & Partners AB

(57) **Abstract**

A blower apparatus includes a blower housing (605), a motor (604) and a blade base (603). The blower housing (605) has an air inlet (606) and an air outlet (607). The blade base (603) is driven by the motor (604) to rotate along a base axis (612) for carrying air from the air inlet (606) to the air outlet (607). A plurality of fan blades (601) extends from the blade base (603). Each fan blade (601) includes multiple edges. A first edge (602) is closest to the base axis (612). A second edge (621) connects the first edge (602) and a third edge (622). The third edge (622) is farthest from the base axis (612). An angle (613) between the first edge (602) of the fan blade (601) and the base axis (612) is equal or less than 80 degrees.

## Description

### TECHNICAL FIELD

The present invention is related to a blower apparatus, and more particularly related to a blower apparatus with flexible configuration.

### BACKGROUND

Blowers are versatile tools widely used in various settings, providing essential functionality for tasks that involve moving air at high speeds. These devices are particularly valuable in outdoor environments where they can be employed for a range of purposes, including cleaning and maintenance. One of the most common applications of blowers is in gardening, where they serve as an effective means of managing leaves, debris, weeds, and other loose materials that accumulate on lawns, gardens, and pathways.

In gardening, blowers are often used to clear fallen leaves during the autumn season. The powerful gusts of air generated by the blower allow users to quickly and efficiently gather leaves into piles for easier collection and disposal. This not only saves time compared to manual raking but also reduces physical strain, making yard work more manageable. Blowers can also be used to remove small debris, such as twigs, dirt, and litter, from gardens, driveways, and patios, contributing to a cleaner and more aesthetically pleasing environment.

Beyond leaf removal, blowers are also useful for controlling weeds and other unwanted vegetation. By directing a concentrated stream of air at certain areas, users can dislodge and remove loose weeds from soil surfaces. This application is particularly effective when combined with other gardening tools, such as trimmers or edgers, enhancing the overall effectiveness of garden maintenance routines. Moreover, blowers can be employed to clear out debris from difficult-to-reach areas, such as under bushes or between rocks, where traditional tools may struggle to access.

However, despite their usefulness, blowers can be cumbersome and challenging to operate, especially when they are large and heavy. The weight of the device can cause fatigue during extended use, limiting the duration and effectiveness of outdoor maintenance tasks. For many users, especially those who are not physically strong, the heavy nature of traditional blowers can be a significant drawback, making it difficult to achieve the desired results without considerable effort.

In light of this, it is important to design blowers that not only deliver powerful airflows but also address the issue of weight. A blower that is lightweight yet capable of producing strong winds would be more practical for a broader range of users, allowing for longer periods of operation without excessive fatigue. Such a design would also make the blower more accessible to users of different ages and physical abilities, increasing its overall utility.

Cost is another crucial consideration in the design and manufacturing of blowers. While performance is a key factor, the price point of a blower can significantly influence consumer purchasing decisions. A well-designed blower that is both affordable and effective is more likely to appeal to a wider audience. Balancing cost with performance and durability is essential for creating a product that meets the needs of consumers while remaining competitive in the market.

In addition to cost and weight, the convenience and flexibility of a blower are also important factors. Users typically prefer blowers that are easy to start, operate, and maintain. Features such as ergonomic handles, adjustable speeds, and easy-to-replace parts can greatly enhance the user experience. A blower that is easy to maneuver and control, particularly in tight spaces or around obstacles, will be more versatile and useful in a variety of settings.

The ability to integrate blowers with other gardening tools and equipment can further enhance their functionality. For instance, blowers that can be easily attached to or used in conjunction with lawn mowers, hedge trimmers, or vacuums provide added convenience and efficiency. This multi-functionality allows users to tackle multiple tasks with fewer tools, simplifying the process of garden and lawn maintenance.

### SUMMARY

The object of the present invention is to accomplish a blower apparatus that delivers powerful airflows and also address the issue of weight and cost-efficient manufacturing.

This object is solved with a blower apparatus comprising a blower housing, wherein the blower housing has an air inlet and an air outlet, a motor and a blade base, driven by the motor to rotate along a base axis for carrying air from the air inlet to the air outlet and a plurality of fan blades extending from the blade base, wherein each fan blade includes multiple edges, wherein a first edge is closest to the base axis, wherein a second edge connects the first edge and a third edge, wherein the third edge is farthest from the base axis and wherein an angle between the first edge of the fan blade and the base axis is equal to or less than 80 degrees.

In one embodiment of the blower apparatus, the blower housing comprises a first air path and a second air path, wherein the first air path and the second air path are configured to carry air from the air inlet to the air outlet and the first air path carries more air than the second air path and wherein the second air path is configured to cool the motor.

In another embodiment of the blower apparatus, the motor, the blade base, and the plurality of fan blades are disposed inside the blower housing, wherein the plurality of fan blades and the blade base are positioned facing the air inlet.

In yet another embodiment of the blower apparatus, the blower housing includes an air inlet pipe and an air outlet pipe, wherein the air inlet is disposed on the air inlet pipe, the air outlet is disposed on the air outlet pipe, an upper duct and a lower duct are provided between the air inlet pipe and the air outlet pipe, the upper duct is connected to the air inlet pipe and comprises a first passage communicating with the first air path and a second passage communicating with the second air path, wherein the first passage is formed around the outer periphery of the second passage.

In another embodiment of the blower apparatus, the upper duct is conically shaped and gradually tapers toward the air inlet and the lower duct is conically shaped and gradually tapers toward the air outlet.

In one embodiment of the blower apparatus, a ratio of a radial length of the first air path within the upper duct to an outer diameter of the fan blades is greater than 0.05 and a ratio of a diameter of the air outlet to the outer diameter of the fan blades is greater than 0.15.

In yet another embodiment of the blower apparatus, a minimum distance between an outer edge of the fan blades and an inner wall surface of the air inlet pipe is between 0.3 mm and 3 mm.

In another embodiment of the blower apparatus, an outer side of the motor is encased by a sleeve, wherein the sleeve is housed within the lower duct, the second air path is formed between the sleeve and the motor, a guiding cone is connected to the side of the lower duct facing the air outlet, a radius of the guiding cone gradually decreases in the airflow direction of the second air path, the guiding cone includes an opening for airflow to exit and the first air path and the second air path communicate at the opening.

In one embodiment of the blower apparatus, the blade base includes air passage holes located between adjacent fan blades, wherein the air passage holes are configured to connect the air inlet to the second passage.

In another embodiment of the blower apparatus, the second air path is formed by the air passage holes, the second passage, the sleeve, and the guiding cone, wherein an extending direction of the second air path is parallel to an extending direction of an output shaft of the motor.

In yet another embodiment of the blower apparatus, the blade base further includes an extending edge that extends toward the upper duct., wherein an orthogonal projection of the extending edge onto the upper duct partially overlaps with the upper duct, such that the extending edge extends into the upper duct and is connected to a stop surface of the upper duct.

In one embodiment of the blower apparatus, the second air path includes a first portion and a second portion, the first portion is located between the fan blades and the upper duct and is perpendicular to an output shaft of the motor, wherein the second portion is formed by the second passage, the sleeve, and the guiding cone and the first portion and the second portion communicate at the second passage.

In another embodiment of the blower apparatus, a distance between the fan blades and the upper duct is greater than or equal to 2 mm.

In one embodiment of the blower apparatus, the blower apparatus comprises a backplate and a power supply assembly, the backplate includes a mounting slot, wherein the blower housing is at least partially mounted in the mounting slot, the power supply assembly is mounted on the backplate to supply power to the motor and the backplate is configured to be worn by a user and is positioned against the user's back.

In another embodiment, the blower apparatus comprises a wireless receiver, and a rotation motor, wherein the blower housing is mountable on a vehicle via a mounting bracket, wherein the wireless receiver is configured to receive a wireless command to drive the rotation motor to adjust a direction of the air outlet.

In yet another embodiment the blower apparatus, further comprises a wireless controller, wherein the wireless controller is configured to be operated by a user to send a wireless command to the wireless receiver and wherein the wireless controller is fixedly mounted on a control handle of the vehicle via a clamp.

In some embodiments, the blower apparatus may also include a lawn mower body, a wireless receiver, and a rotation motor. The lawn mower body may further include a control handle and a wireless controller. The wireless controller may be rod-shaped and forms a part of the control handle. In some embodiments, the rod-shaped wireless controller is attached to the control handle with a detachable threaded structure.

### BRIEF DESCRIPTION OF DRAWINGS

Fig. 1 illustrates a blower apparatus embodiment.
Fig. 2 is a structural diagram of the hair dryer in this invention.
Fig. 3 is a cross-sectional view of the first embodiment of the hair dryer shown in Fig. 2.
Fig. 4 shows the airflow direction in the first air channel in Fig. 3.
Fig. 5 is a cross-sectional view of the fan, fan blade, and upper duct in Fig. 3.
Fig. 6 is a structural diagram of the fan blade in Fig. 5.
Fig. 7 is another angle view of the fan blade shown in Fig. 6.
Fig. 8 shows the airflow direction in the second air channel in Fig. 3.
Fig. 9 is a cross-sectional view of the second embodiment of the hair dryer shown in Fig. 2.
Fig. 10 is a cross-sectional view of the fan, fan blade, and upper duct in Fig. 9.
Fig. 11 is a front view of Fig. 10.
Fig. 12 shows the airflow direction in the second air channel in Fig. 9.
Fig. 13 is a stereoscopic structural diagram of the car-mounted hair dryer in this invention.
Fig. 14 is a stereoscopic structural diagram of the controller in this invention.
Fig. 15 is a cross-sectional view of Fig. 14.
Fig. 16 is an internal stereoscopic structural diagram of the controller in Fig. 14.
Fig. 17 is a stereoscopic assembly diagram of the steering motor and blowing tube in Fig. 13.
Fig. 18 is a stereoscopic structural diagram of the upper shell in Fig. 14.
Fig. 19 is a stereoscopic assembly diagram of the control lever and positioning piece in Fig. 14.
Fig. 20 is a stereoscopic assembly diagram of the lower shell and limiting piece in Fig. 14.
Fig. 21 is a stereoscopic assembly diagram of the lower shell and cover plate in Fig. 14.
Fig. 22 is a stereoscopic assembly diagram of the controller and control handle in Fig. 14.
Fig. 23 is a stereoscopic structural diagram of the clamp in Fig. 22.
Fig. 24 is a flow chart of the car-mounted hair dryer control method in this invention.
Fig. 25 is a stereoscopic structural diagram of the car-mounted hair dryer in this invention.
Fig. 26 is a stereoscopic structural diagram of the controller in this invention.
Fig. 27 is a stereoscopic assembly diagram of the steering motor and blowing tube in Fig. 25.
Fig. 28 is a stereoscopic structural diagram of the upper shell in Fig. 26.
Fig. 29 is a stereoscopic assembly diagram of the control lever and positioning piece in Fig. 26.
Fig. 30 is a stereoscopic assembly diagram of the lower shell and circuit board in Fig. 26.
Fig. 31 is a stereoscopic assembly diagram of the lower shell and battery pack in Fig. 26.
Fig. 32 is a stereoscopic assembly diagram of the controller and control handle in Fig. 26.
Fig. 33 is a stereoscopic structural diagram of the connecting tube in Fig. 32.
Fig. 34 is a stereoscopic structural diagram of the control handle in Fig. 32.
Fig. 35 is a flow chart of the car-mounted hair dryer control method in this invention.
Fig. 36 is a structural diagram of the backpack-style blower according to the preferred embodiment of this utility model.
Fig. 37 is an exploded view of the backpack-style blower shown in Fig. 36.
Fig. 38 is a cross-sectional view of the backpack-style blower shown in Fig. 36.
Fig. 39 is a cross-sectional view of the blowing assembly in Fig. 36.

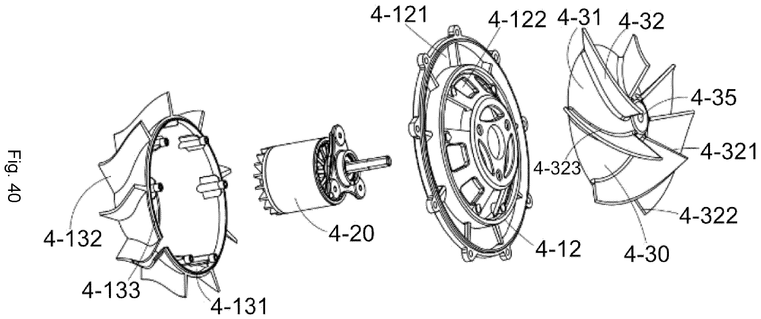

Fig. 40 is an exploded view of the guide vane, upper duct, motor, and fan blade shown in Fig. 37.
Fig. 41 shows the airflow direction in the first air channel in Fig. 39.
Fig. 42 shows the airflow direction in the second air channel in Fig. 39.
Fig. 43 is a structural diagram of another embodiment of the fan blade shown in Fig. 40.
Fig. 44 is a structural diagram of the fan blade in Fig. 43 from another angle.
Fig. 45 is a structural schematic diagram of a handheld hair dryer according to a preferred embodiment of this utility model.
Fig. 46 is an exploded view of the handheld hair dryer shown in Fig. 45.
Fig. 47 is a cross-sectional view of the blowing assembly in Fig. 45.
Fig. 48 is an exploded view of the guide vane, upper duct, motor, and fan blade in Fig. 46.
Fig. 49 shows the airflow direction in the first air flow channel in Fig. 47.
Fig. 50 shows the airflow direction in the second air flow channel in Fig. 47.
Fig. 51 is a structural schematic diagram of another embodiment of the fan blade in Fig. 48.
Fig. 52 is a structural schematic diagram of the fan blade in Fig. 51 from another angle.

### DETAILED DESCRIPTION

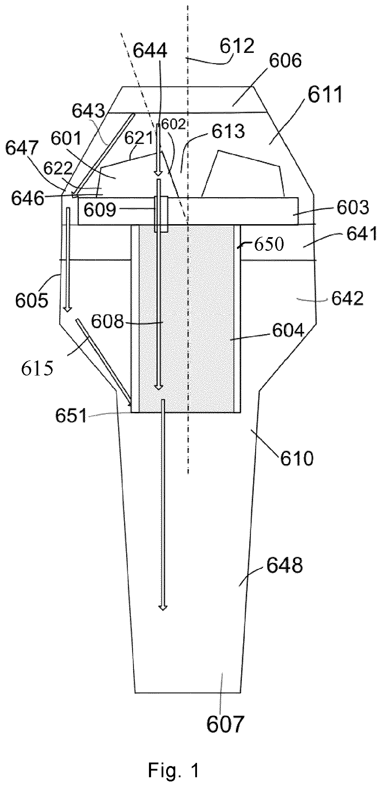

In Fig. 1, a blower apparatus includes a blower housing 605, a motor 604 and a blade base 603.

The blower housing 605 has an air inlet 606 and an air outlet 607.

The blade base 603 is driven by the motor 604 to rotate along a base axis 612 for carrying air from the air inlet 606 to the air outlet 607.

The plurality of fan blades 601 extend from the blade base 603.

Each fan blade 601 includes multiple edges.

A first edge 602 is closest to the base axis 612.

A second edge 621 connects the first edge 602 and a third edge 622.

The third edge 622 is farthest from the base axis 612.

An angle 613 between the first edge 602 of the fan blade 601 and the base axis 612 is equal or less than 80 degrees.

In some embodiments, the blower housing 605 includes a first air path 615 and a second air path 608.

The first air path 615 and the second air path 608 are configured to carry air from the air inlet 606 to the air outlet 607.

The first air path 615 carries more air than the second air path 608.

The second air path 608 is configured to cool the motor 604.

In some embodiments, the motor 604, the blade base 603, and the plurality of fan blades 601 are disposed inside the blower housing 605.

The plurality of fan blades 601 and the blade base 603 are positioned facing the air inlet 606.

In some embodiments, the blower housing 605 includes an air inlet pipe 611 and an air outlet pipe 648.

The air inlet 606 is disposed on the air inlet pipe 611.

The air outlet 607 is disposed on the air outlet pipe 648.

An upper duct 641 and a lower duct 642 are provided between the air inlet pipe 611 and the air outlet pipe 648.

The upper duct 641 is connected to the air inlet pipe 611.

The upper duct 641 includes a first passage 643 communicating with the first air path 615 and a second passage 644 communicating with the second air path 608.

The first passage 643 is formed around the outer periphery of the second passage 644.

In some embodiments, the upper duct 641 is conically shaped and gradually tapers toward the air inlet 606.

The lower duct 642 is conically shaped and gradually tapers toward the air outlet 607.

In some embodiments, a ratio of a radial length of the first air path within the upper duct to an outer diameter of the fan blades is greater than 0.05.

A ratio of a diameter of the air outlet to the outer diameter of the fan blades is greater than 0.15.

In some embodiments, a minimum distance between an outer edge of the fan blades and an inner wall surface of the air inlet pipe is between 0.3 mm and 3 mm.

In some embodiments, an outer side of the motor 604 is encased by a sleeve 650.

The sleeve 650 is housed within the lower duct 642.

The second air path 608 is formed between the sleeve 650 and the motor 604.

A guiding cone is connected to the side of the lower duct facing the air outlet.

A radius of the guiding cone 651 gradually decreases in the airflow direction of the second air path 608.

The guiding cone 651 includes an opening for airflow to exit.

The first air path and the second air path communicate at the opening.

The blade base includes air passage holes 609 located between adjacent fan blades 601.

The air passage holes 609 are configured to connect the air inlet to the second passage.

In some embodiments, the second air path is formed by the air passage holes, the second passage, the sleeve, and the guiding cone.

An extending direction of the second air path is parallel to an extending direction of an output shaft of the motor.

In some embodiments, the blade base further includes an extending edge that extends toward the upper duct.

An orthogonal projection of the extending edge onto the upper duct partially overlaps with the upper duct, such that the extending edge extends into the upper duct and is connected to a stop surface of the upper duct.

In some embodiments, the second air path includes a first portion and a second portion.

The first portion is located between the fan blades and the upper duct and is perpendicular to an output shaft of the motor.

The second portion is formed by the second passage, the sleeve, and the guiding cone.

The first portion and the second portion communicate at the second passage.

In some embodiments, a distance between the fan blades and the upper duct is greater than or equal to 2 mm.

In some embodiments, the blower apparatus may also include a backplate and a power supply assembly.

The backplate includes a mounting slot.

The blower housing is mounted in the mounting slot.

The power supply assembly is mounted on the backplate to supply power to the motor.

The backplate is configured to be worn by a user and is positioned against the user's back.

In some embodiments, the blower apparatus may also include a handle connected to the blower housing.

The handle is configured for an operator to grip.

In some embodiments, the blower apparatus may also include a lawn mower body, a wireless receiver, and a rotation motor.

The blower housing is mounted on the lawn mower body via a mounting bracket.

The wireless receiver is configured to receive a wireless command to drive the rotation motor to adjust a direction of the air outlet.

In some embodiments, the lawn mower body further includes a control handle and a wireless controller.

The wireless controller is configured to be operated by a user to send the wireless command to the wireless receiver.

In some embodiments, the wireless controller is fixedly mounted on the control handle via a clamp.

In some embodiments, the wireless controller is rod-shaped and forms a part of the control handle.

In some embodiments, the rod-shaped wireless controller is attached to the control handle with a detachable threaded structure.

### FIRST EMBODIMENT

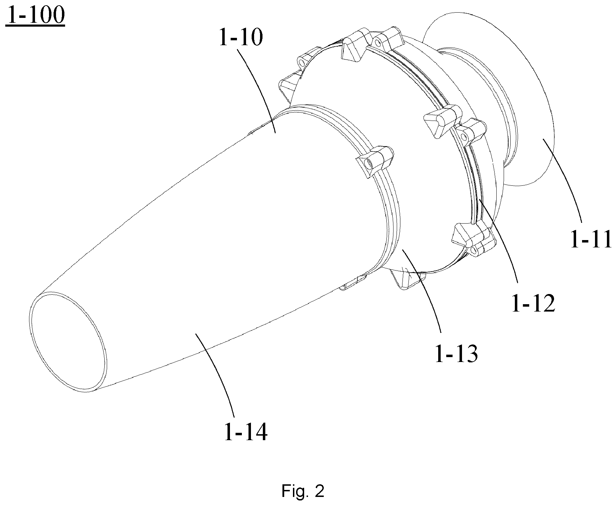

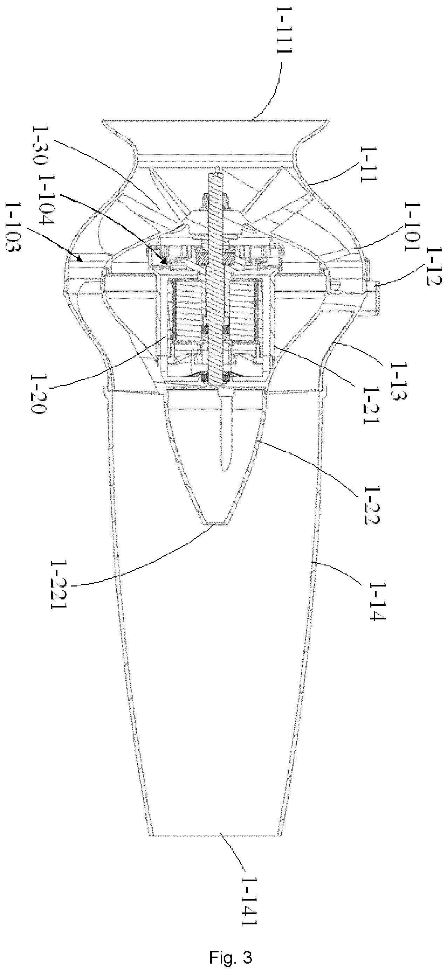

As shown in Fig. 2 and Fig. 3, the present invention discloses a blower 1-100, which can be used independently or mounted on other tools for cooperative use. Specifically, the blower 1-100 includes a housing 1-10, a fan 1-20, and fan blades 1-30 housed within the housing 1-10. The housing 1-10 extends axially, and the fan 1-20 is used to drive the fan blades 1-30 to rotate, generating airflow through the housing 1-10.

As shown in Fig. 3, the housing 1-10 includes, in sequential order along its axial direction, an air inlet pipe 1-11, an upper duct 1-12, a lower duct 1-13, and an air outlet pipe 1-14. An air inlet 1-111 is provided on the air inlet pipe 1-11, and an air outlet 1-141 is provided on the air outlet pipe 1-14. The fan blades 1-30 and the fan 1-20 are housed within the housing 1-10 and positioned between the air inlet 1-111 and the air outlet 1-141. The fan blades 1-30 are located at the air inlet 1-111, and the fan 1-20 is connected to the fan blades 1-30 to drive their rotation. An upper duct 1-12 and a lower duct 1-13, which are interconnected, are provided between the air inlet pipe 1-11 and the air outlet pipe 1-14. The upper duct 1-12 is connected to the air inlet pipe 1-11, and the lower duct 1-13 is connected to the air outlet pipe 1-14.

Specifically, the upper duct 1-12 is conically shaped and gradually tapers toward the air inlet 1-111, and the lower duct 1-13 is conically shaped and gradually tapers toward the air outlet 1-141. This configuration allows the airflow to be directed in the axial direction. In other words, external airflow enters parallel to the axial direction through the air inlet 1-111. After passing through the rotating fan blades 1-30, the airflow moves at a certain angle to the axial direction along the upper duct 1-12, then returns to flow parallel to the axial direction along the lower duct 1-13, thereby guiding the airflow direction.

The minimum diameter of the air inlet pipe 1-11 is smaller than the diameter of the air inlet 1-111, meaning the inlet of the air inlet pipe 1-11 is recessed inward to increase the air intake volume.

Preferably, the fan blades 1-30 are housed within the air inlet pipe 1-11, and the fan 1-20 is housed within the lower duct 1-13. Specifically, there is a first gap 1-101 between the outer edge of the fan blades 1-30 and the inner wall surface of the air inlet pipe 1-11, such that the minimum distance between the outer edge of the fan blades 1-30 and the inner wall surface of the air inlet pipe 1-11 is between 0.3 mm and 3 mm.

Through CFD simulation analysis, as shown in Table 1 below, under the same rotational speed (12000 RPM), the larger the first gap 1-101, the lower the performance efficiency; when the first gap 1-101 is less than 0.3 mm, the fan blades 1-30 will rub against the inner wall of the air inlet pipe 1-11 during high-speed operation, leading to damage.

**TABLE 1**

| | Blow Force (N) | Power (KW) |
|---|---|---|
| Mixed Flow 12000 rpm, 0.4 mm Tip Clearance | 38 | 2.3 |
| Mixed Flow 14000 rpm, 0.4 mm Tip Clearance | 52 | 3.7 |
| Mixed Flow 12000 rpm, 1.5 mm Tip Clearance | 32 | 2 |

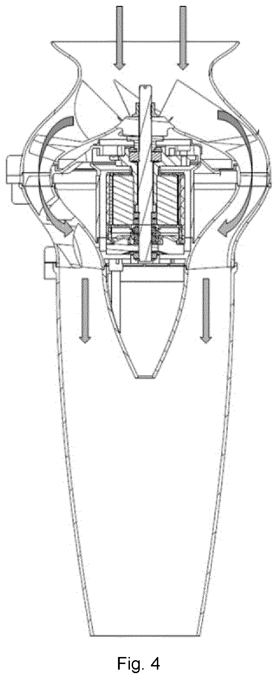

As shown in Fig. 3 and Fig. 4, to further enhance the airflow and cool the fan 1-20, the blower 1-100 is equipped with a first air path 1-103 and a second air path 1-104. The first air path 1-103 is formed between the fan 1-20 and the housing 1-10, and the second air path 1-104 passes through the fan blades 1-30 and the fan 1-20, allowing the airflow entering the second air path 1-104 to cool the fan 1-20. It is understood that since the fan 1-20 is necessarily positioned at the axial center of the housing 1-10, the second air path 1-104 extends along the axial center of the housing 1-10, while the first air path 1-103 is circumferentially formed around the outer periphery of the second air path 1-104. Therefore, when the fan 1-20 rotates, external airflow can enter the housing 1-10 through the air inlet 1-111, with one portion flowing along the first air path 1-103 toward the air outlet 1-141, and another portion flowing along the second air path 1-104 through the fan 1-20 toward the air outlet 1-141, thereby dissipating heat from the fan 1-20.

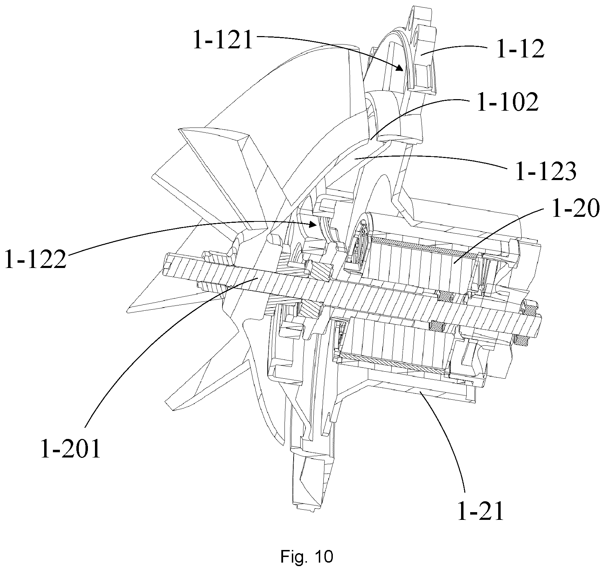

As shown in Fig. 10, the upper duct 1-12 has a first passage 1-121 that communicates with the first air path 1-103 and a second passage 1-122 that communicates with the second air path 1-104. The first passage 1-121 is formed around the outer periphery of the second passage 1-122, and the upper duct 1-12 further includes a connecting member 1-123 that connects the first passage 1-121 and the second passage 1-122. In other words, the first passage 1-121 is a first opening provided at the top of the upper duct 1-12, which extends through the upper duct 1-12, allowing the internal space of the air inlet pipe 1-11 to communicate with the internal space of the lower duct 1-13; the second passage 1-122 is a second opening provided at the middle position of the upper duct 1-12, which extends through the upper duct 1-12, allowing the internal space of the air inlet pipe 1-11 to communicate with the space where the fan 1-20 is located; the connecting member 1-123 is located between the first passage 1-121 and the second passage 1-122, separating the first passage 1-121 and the second passage 1-122, so that the airflow entering from the air inlet 1-111 can be divided into two streams, which flow respectively from the first passage 1-121 and the second passage 1-122 and continue into the lower duct 1-13.

Preferably, the ratio of the radial length of the first air path 1-103 within the upper duct 1-12 to the outer diameter of the fan blades 1-30 is greater than 0.05, and the ratio of the diameter of the air outlet 1-141 to the outer diameter of the fan blades 1-30 is greater than 0.15, which not only facilitates air intake but also ensures stable wind speed.

As shown in Fig. 3, the outer side of the fan 1-20 is encased by a sleeve 1-21, which is housed within the lower duct 1-13 and connected to the lower duct 1-13. The first air path 1-103 is formed within the lower duct 1-13, and the second air path 1-104 is formed between the sleeve 1-21 and the fan 1-20. In other words, the airflow converging from the upper duct 1-12 is still divided into the first air path 1-103 and the second air path 1-104 within the lower duct 1-13.

In this embodiment, the side of the lower duct 1-13 facing the air outlet 1-141 is connected to a guiding cone 1-22, and the first air path 1-103 is guided to the air outlet 1-141 after entering the lower duct 1-13 by the guiding cone 1-22. The guiding cone 1-22 extends along the extension direction of the output shaft 1-201 of the fan 1-20 into the air outlet pipe 1-14. The radius of the guiding cone 1-22 gradually decreases in the airflow direction of the second air path 1-104 (i.e., the extension direction of the output shaft 1-201), and the guiding cone 1-22 is provided with an opening 1-221 for the outflow of airflow, where the first air path 1-103 and the second air path 1-104 communicate at the opening 1-221.

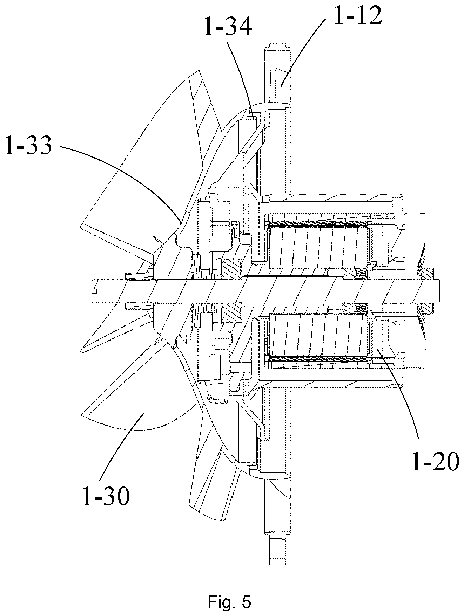

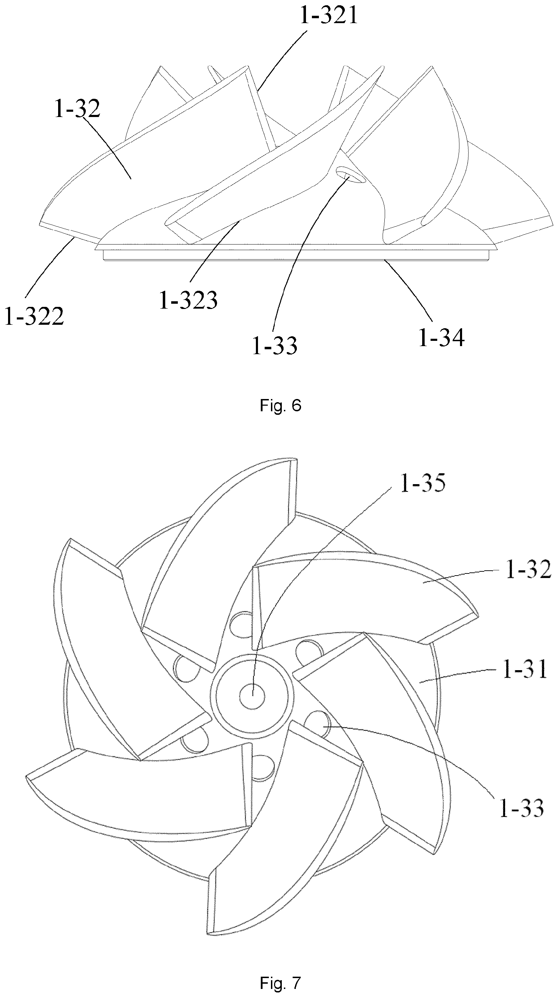

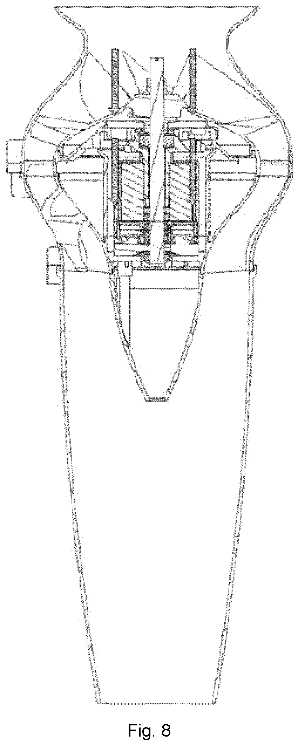

As shown in Fig. 5 through Fig. 8, and in conjunction with Fig. 4, as the first embodiment of the present invention, the fan blades 1-30 are mixed flow fan blades, with the fan blades 1-30 comprising a base 1-31 and blades 1-32 spirally extending from the center of the base 1-31. The blades 1-32 preferably include six blades, with the base 1-31 having a pivot hole 1-35 at its axis, through which the fan 1-20 passes to drive the base 1-31 to rotate.

Preferably, each blade 1-32 has a first edge 1-321, a second edge 1-322, and a third edge 1-323 connected to the base 1-31. The blades 1-32 extend toward the air inlet 1-111, i.e., both the first edge 1-321 and the second edge 1-322 also extend toward the air inlet 1-111. The first edge 1-321 is upright on the base 1-31 and is positioned close to the axis of the base 1-31, while the second edge 1-322 is also upright on the base 1-31 and is positioned away from the axis of the base 1-31. The two ends of the third edge 1-323 are respectively connected to the first edge 1-321 and the second edge 1-322. The angle between the extension direction of the first edge 1-321 and the axial direction of the base 1-31 is less than or equal to 80°, creating a concave space at the air inlet 1-111, which helps to increase the air intake volume. The angle between the extension direction of the third edge 1-323 and the axial direction of the base 1-31 is less than 90°, guiding the airflow into the air outlet pipe 1-14 under the influence of the housing 1-10 and the lower duct 1-13.

The base 1-31 is provided with air passage holes 1-33 located between adjacent blades 1-32. There are also six air passage holes 1-33, positioned close to the axis of the fan blades 1-30, and the opening direction of the air passage holes 1-33 is parallel to the axial direction of the fan blades 1-30, enabling communication between the air inlet 1-111 and the second passage 1-122.

The base 1-31 further include an extending edge 1-34 extending toward the upper duct 1-12. The extending edge 1-34 is arranged around the base 1-31 and extends in the direction opposite to the blades 1-32. The orthogonal projection of the extending edge 1-34 onto the upper duct 1-12 partially overlaps with the upper duct 1-12, allowing the extending edge 1-34 to extend into the upper duct 1-12 and connect with a stop surface of the upper duct 1-12. Since the upper duct 1-12 is fixed and does not rotate, the fan blades 1-30 can rotate relative to the upper duct 1-12, and thus, the extending edge 1-34 can be used to prevent airflow from entering the second air path 1-104 through the gap between the fan blades 1-30 and the upper duct 1-12.

In this embodiment, the second air path 1-104 is formed by the air passage holes 1-33, the second passage 1-122, the sleeve 1-21, and the guiding cone 1-22. The extension direction of the second air path 1-104 is parallel to the extension direction of the output shaft 1-201 of the fan blades 1-30.

In other words, in this first embodiment, the airflow entering the air inlet pipe 1-11 partly enters the lower duct 1-13 through the first passage 1-121, while another part flows through the air passage holes 1-33 and enters the second passage 1-122, then into the sleeve 1-21 and the guiding cone 1-22, and finally flows toward the air outlet 1-141.

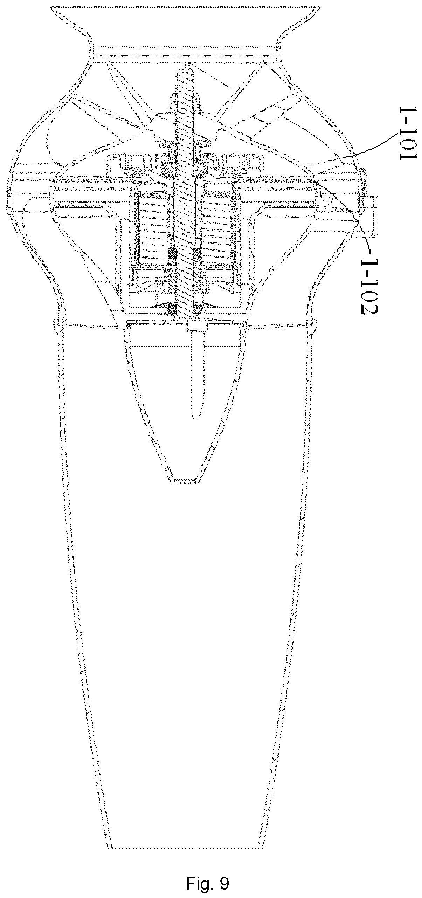

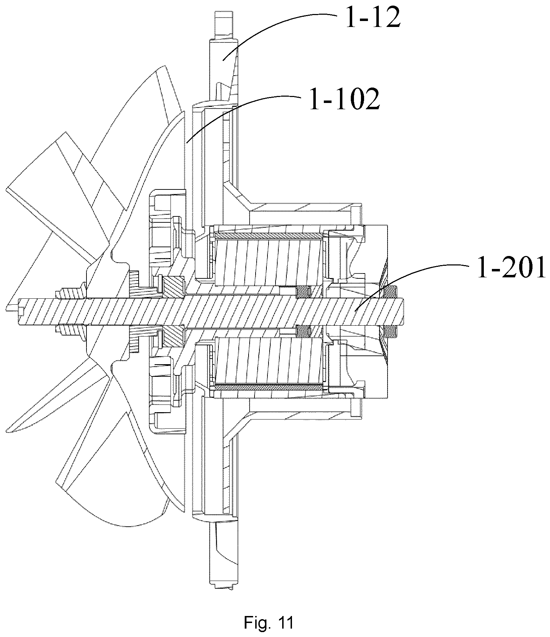

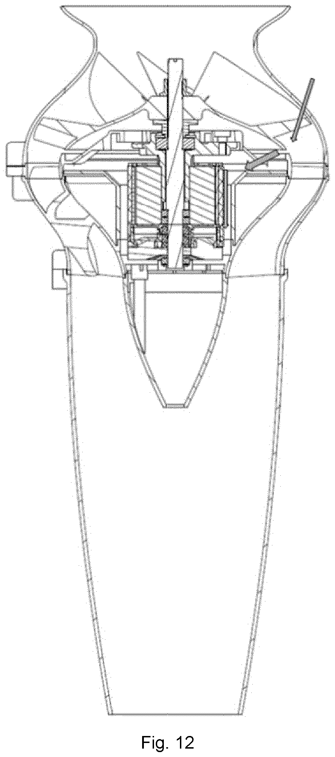

As shown in Fig. 9 through Fig. 12, and in conjunction with Fig. 4, in the second embodiment of the present invention, the fan blades 1-30 are not provided with air passage holes 1-33 or extending edges 1-34. The second air path 1-104 includes a first portion and a second portion, where the first portion is located between the fan blades 1-30 and the upper duct 1-12 and is perpendicular to the output shaft 1-201 of the fan 1-20. There is a second gap 1-102 between the fan blades 1-30 and the upper duct 1-12, such that the distance between the fan blades 1-30 and the upper duct 1-12 is greater than or equal to 2 mm. This second gap 1-102 forms the first portion, while the second portion is formed by the second passage 1-122, the sleeve 1-21, and the guiding cone 1-22. The first portion and the second portion communicate at the second passage 1-122.

In other words, in this second embodiment, the airflow entering the air inlet pipe 1-11 partly enters the lower duct 1-13 through the first passage 1-121, while another part flows through the second gap 1-102 and enters the second passage 1-122, then into the sleeve 1-21 and the guiding cone 1-22, and finally flows toward the air outlet 1-141.

Through CFD simulation analysis, as shown in Table 2 below, at a rotational speed of 13000 RPM, the thrust of the blower 1-100 of the present invention can reach 49.56 N, achieving the goal of high performance at low speeds. Additionally, the corresponding noise is reduced during low-speed operation, where efficiency = (air volume * total pressure) / shaft power.

**TABLE 2**

| rotational speed | air volume (CFM) | Peak velocity at the air outlet | | Average velocity at the air outlet | | total pressure (Pa) | Torque (N-m) | Shaft Power (W) | Efficiency (%) | max thrust (N) |
|---|---|---|---|---|---|---|---|---|---|---|
| | | m/s | MPH | m/s | MPH | | | | | |
| 10000RPM | 740.36 | 68.05 | 152.25 | 64.58 | 144.46 | 2619.33 | 1.3006 | 1361.3 | 66.48 | 28.8 |
| 10500RPM | 777.75 | 71.46 | 159.87 | 67.84 | 151.76 | 2890.42 | 1.4334 | 1575.28 | 66.6 | 31.77 |
| 11000RPM | 815.17 | 74.87 | 167.49 | 71.1 | 159.06 | 3174.94 | 1.5726 | 1810.56 | 66.71 | 34.89 |
| 11500RPM | 852.58 | 78.28 | 175.12 | 74.36 | 166.36 | 3472.85 | 1.7182 | 2068.17 | 66.81 | 38.15 |
| 12000RPM | 890.02 | 81.69 | 182.74 | 77.63 | 173.67 | 3784.32 | 1.8703 | 2349.11 | 66.91 | 41.56 |
| 13000RPM | 971.93 | 89.2 | 199.56 | 84.68 | 189.44 | 4505.45 | 2.2038 | 3005.61 | 67.99 | 49.56 |
| 15000RPM | 1114.98 | 102.15 | 228.52 | 97.25 | 217.56 | 5937.26 | 2.9189 | 4582.7 | 67.41 | 65.11 |

As shown in Table 3 below, under the same shaft power, the performance and efficiency of the mixed flow fan blades are both higher than those of the axial flow fan blades. Additionally, at this time, the rotational speed of the axial flow fan blades reaches as high as 38830 RPM, which would generate higher noise.

**TABLE 3**

| | rotational speed | air volume (CFM) | Peak velocity at the air outlet | | Average velocity at the air outlet | | total pressure (Pa) | Torque (N-m) | Shaft Power (W) | Efficiency (%) | max thrust (N) |
|---|---|---|---|---|---|---|---|---|---|---|---|
| | | | m/s | MPH | m/s | MPH | | | | | |
| mixed fan | 13000RPM | 971.93 | 89.2 | 199.56 | 84.68 | 189.44 | 4505.45 | 2.2038 | 3005.61 | 67.99 | 49.56 |
| axial fan | 38830RPM | 939.68 | 83.88 | 187.66 | 79.94 | 178.84 | 3966.09 | 0.7383 | 3000.53 | 57.96 | 45.06 |

In summary, on one hand, the present invention sets the first edge 1-321 of the blade 1-32 at an angle less than or equal to 80° relative to the axial direction of the base 1-31. On the other hand, by providing the first air path 1-103 and the second air path 1-104, when the fan 1-20 rotates, the external airflow entering from the air inlet 1-111 can partially flow along the first air path 1-103 toward the air outlet 1-141, and partially flow along the second air path 1-104 through the fan 1-20 toward the air outlet 1-141, thereby dissipating heat from the fan 1-20. Compared to the prior art, the present invention can achieve higher thrust output at lower rotational speeds, reduce noise, enhance the cooling effect of the fan 1-20, and improve operational efficiency.

### SECOND EMBODIMENT

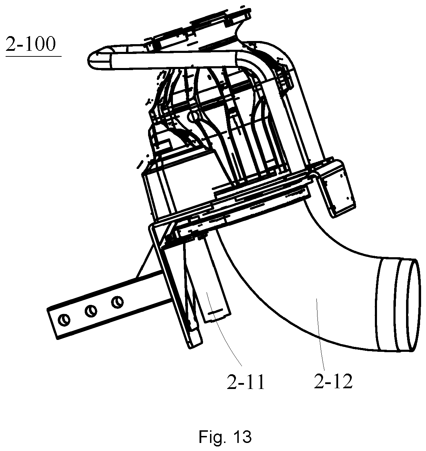

As shown in Fig. 13 to Fig. 14, the present invention discloses a vehicle-mounted blower control system, comprising: a vehicle-mounted blower 2-100, which is equipped with a wireless receiver (not shown); and a controller 2-200, which is equipped with a wireless transmitter (not shown). The wireless transmitter communicates with the wireless receiver, transmitting control signals to the wireless receiver to control the operation of the vehicle-mounted blower 2-100. The controller 2-200 is wirelessly connected to the vehicle-mounted blower 2-100. Compared to the prior art, the vehicle-mounted blower control system of the present invention adopts wireless control, so the installation positions of the controller 2-200 and the vehicle-mounted blower 2-100 are not restricted, and the safety of the vehicle-mounted blower 2-100 during operation is enhanced.

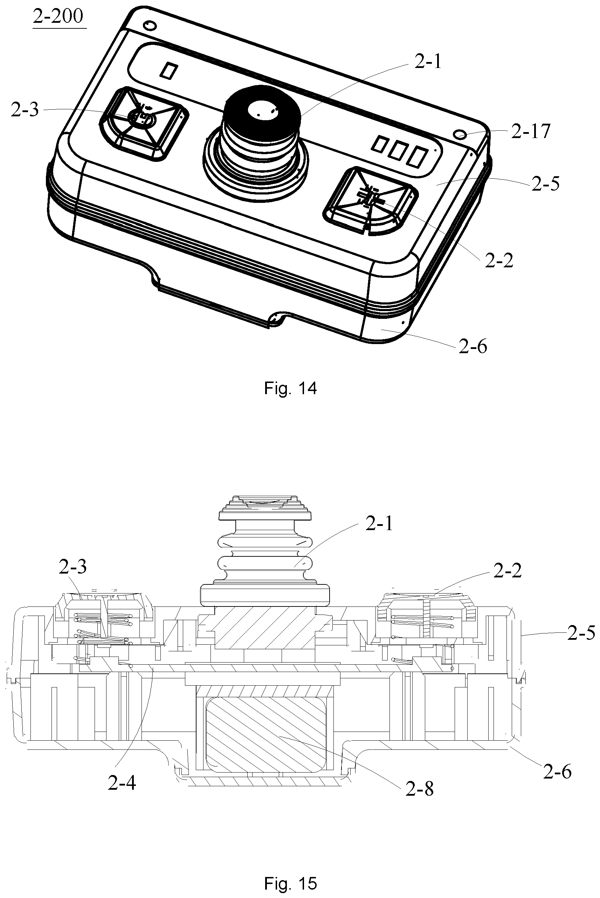

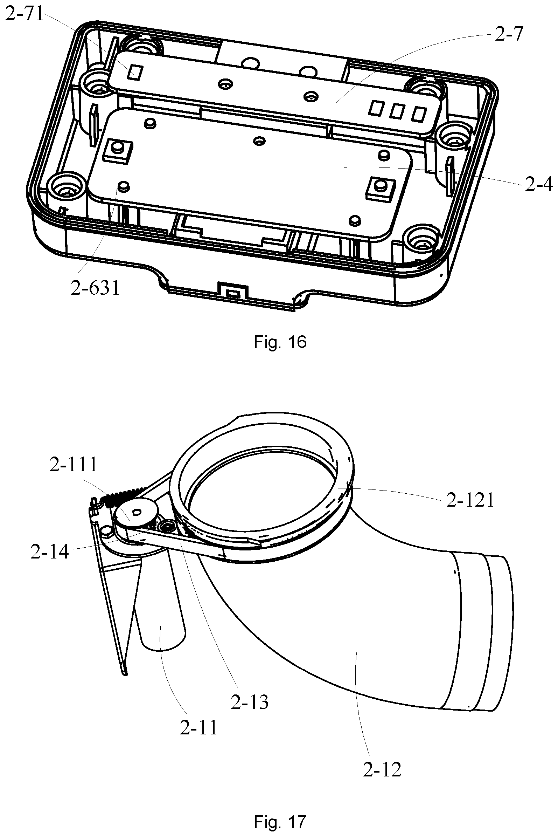

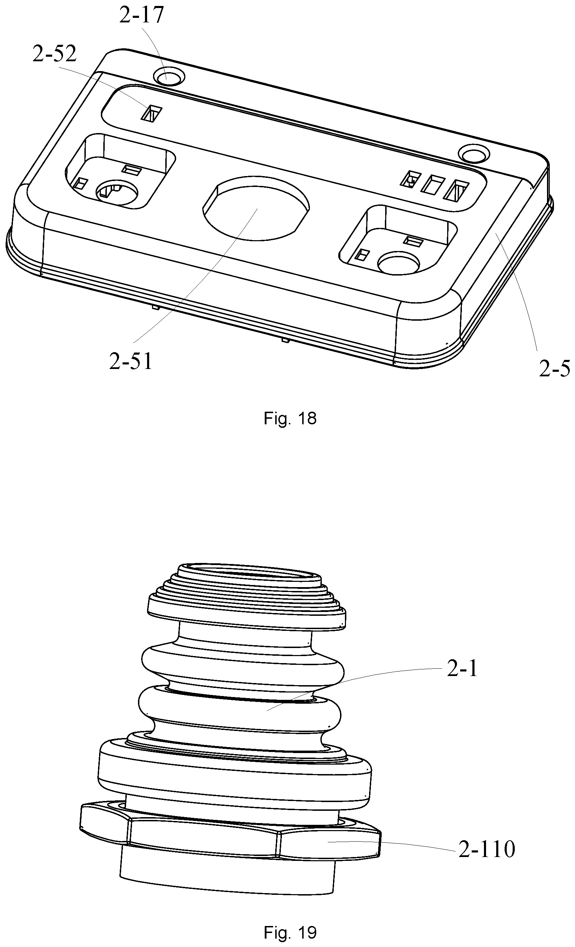

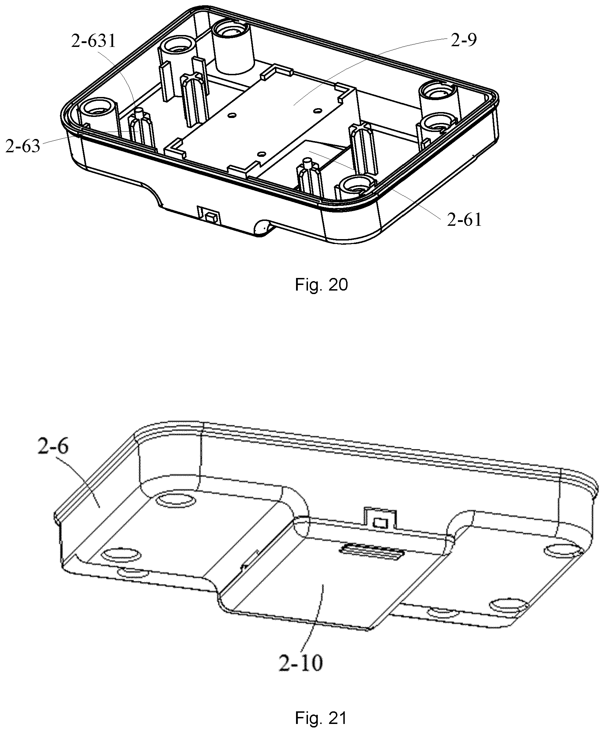

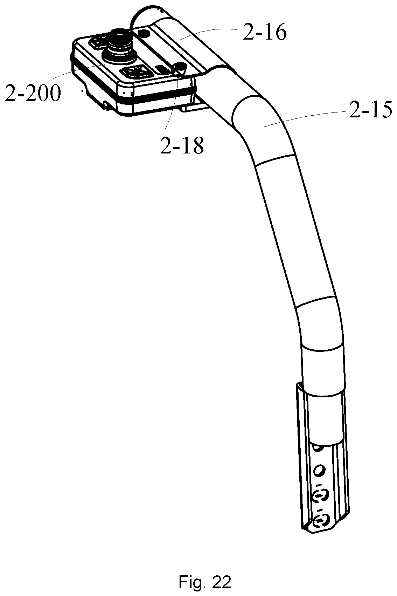

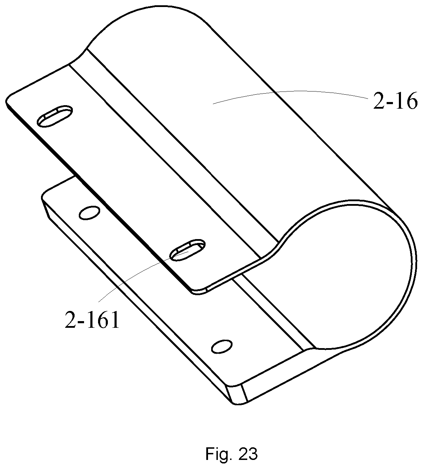

As shown in Fig. 15 to Fig. 23, the controller 2-200 is provided with a control lever 2-1, which is electrically connected to the wireless transmitter. The control lever 2-1 is configured to move linearly along the X-axis and/or Y-axis direction, sending control signals to the wireless transmitter to control the direction of the vehicle-mounted blower 2-100, thereby achieving optimal blowing effect. The controller 2-200 is also provided with a control button 2-2, which is electrically connected to the wireless transmitter. The control button 2-2 is configured to send start/stop signals to the wireless transmitter to control the vehicle-mounted blower 2-100 to start or stop. A light press of the control button 2-2 starts the vehicle-mounted blower 2-100, and pressing the control button 2-2 again stops the vehicle-mounted blower 2-100.

The controller 2-200 is further provided with a power switch button 2-3, which controls the power on and off, thereby controlling the activation or deactivation of the controller 2-200. The power switch button 2-3 also controls the pairing between the wireless transmitter and the wireless receiver, enabling wireless communication between the controller 2-200 and the vehicle-mounted blower 2-100, so that the vehicle-mounted blower 2-100 can be controlled via the controller 2-200. A short press of the power switch button 2-3 for more than 500ms activates the controller 2-200; a long press of the power switch button 2-3 for more than 3 seconds deactivates the controller 2-200. When the controller 2-200 is in the activated state, pressing and holding the power switch button 2-3 for more than 10 seconds enters pairing mode, with a pairing timeout period of 30 seconds. Once the wireless transmitter and the wireless receiver are successfully paired for the first time, the controller 2-200 does not need to be repaired upon subsequent activations, unless it is paired with another device. In other words, the controller 2-200 can directly control the vehicle-mounted blower 2-100 upon the next activation. Compared to the prior art, this eliminates the one-to-one connection between the controller 2-200 and the vehicle-mounted blower 2-100, and the use of wireless communication allows it to be compatible with all machines of the same company's products, requiring only wireless pairing, which further reduces the wear and tear of components. In this embodiment, the control button 2-2 and the power switch button 2-3 are separately arranged on both sides of the control lever 2-1 and are elastically mounted on the controller.

The controller 2-200 is equipped with a circuit board 2-4, and the wireless transmitter is integrated into the circuit board 2-4. The vehicle-mounted blower 2-100 is equipped with a steering control board (not shown), and the wireless receiver is integrated into the steering control board. Specifically, the vehicle-mounted blower is provided with a steering motor 2-11 and a blower pipe 2-12. The steering motor 2-11 is electrically connected to the steering control board, and one end of the steering motor 2-11 is provided with a driving pulley 2-111, which is driven by the steering motor 2-11. The blower pipe 2-12 is arc-shaped, and one end of the blower pipe 2-12 is provided with a driven pulley 2-121. The driving pulley 2-111 and the driven pulley 2-121 are connected by a timing belt 2-13. The vehicle-mounted blower 2-100 is also provided with a tensioning pulley 2-14, which is located between the driving pulley 2-111 and the driven pulley 2-121 and is in contact with the timing belt 2-13 to tension the timing belt 2-13, so that the driving pulley 2-111 drives the driven pulley 2-121 to rotate through the timing belt 2-13. The specific structure of the vehicle-mounted blower 2-100 is applicable to the prior art and will not be described in detail here.

In this embodiment, the vehicle-mounted blower 2-100 can be equipped with either one set or two sets of steering motors 2-11, both of which achieve the rotation of the driven pulley 2-121 by the driving pulley 2-111 through the timing belt 2-13. When the vehicle-mounted blower 2-100 is equipped with one set of steering motors 2-11 to control the direction of the blower pipe 2-12, the blower pipe 2-12 can turn in the up-down (Y-axis) or left-right (X-axis) direction. When the vehicle-mounted blower 2-100 is equipped with two sets of steering motors 2-11 to control the direction of the blower pipe 2-12, the blower pipe 2-12 can simultaneously turn in both the up-down (Y-axis) and left-right (X-axis) directions.

Specifically, the control lever 2-1 is electrically connected to the circuit board 2-4. The control lever 2-1 sends control signals to the wireless transmitter, which transmits the control signals to the wireless receiver. The wireless receiver receives the control signals, and the steering control board controls the rotation of the steering motor 2-11. The steering motor 2-11 drives the driving pulley 2-111 to rotate, and the rotation of the driven pulley 2-121 is controlled by the timing belt 2-13, thereby controlling the direction of the blower pipe 2-12. This allows the blower pipe 2-12 to rotate along the X-axis and/or Y-axis direction. The specific adjustment method can be as follows: when the control lever 2-1 moves to the left in the X-axis direction, the blower pipe 2-12 correspondingly turns to the left; when the control lever 2-1 moves to the right in the X-axis direction, the blower pipe 2-12 correspondingly turns to the right. Similarly, when the control lever 2-1 moves upward in the Y-axis direction, the blower pipe 2-12 correspondingly turns upward, and when the control lever 2-1 moves downward in the Y-axis direction, the blower pipe 2-12 correspondingly turns downward. By using the control lever 2-1 to control the rotation of the steering motor 2-11 through the steering control board, the blower pipe 2-12 can be adjusted to move left, right, up, and down, thereby increasing the blowing range and making operation simple and convenient.

The controller 2-200 includes an upper housing 2-5 and a lower housing 2-6 that are assembled together. The upper housing 2-5 and the lower housing 2-6 are fixedly mounted by screws. The wireless transmitter is housed within the accommodating space (not numbered) formed by the upper housing 2-5 and the lower housing 2-6. The circuit board 2-4 is located within the accommodating space, and the upper housing 2-5 has a mounting hole 2-51 through which the control lever 2-1 passes and is positioned. The bottom of the control lever 2-1 is provided with a positioning member 2-110, which is fixedly connected to the upper housing 2-5, thereby positioning and connecting the control lever 2-1 with the upper housing 2-5.

The controller 2-200 is also provided with a light source board 2-7, which is positioned close to the upper housing 2-5. The light source board 2-7 is equipped with an indicator light 2-71, and the upper housing 2-5 has a through-hole 2-52, where the indicator light 2-71 is exposed through the through-hole 2-52. The controller 2-200 is equipped with a battery pack 2-8, and the bottom of the lower housing 2-6 is provided with a downwardly recessed opening 2-61, in which the battery pack 2-8 is installed. The side of the opening 2-61 close to the upper housing 2-5 is provided with a limiting member 2-9, and the other side is provided with a cover plate 2-10. The limiting member 2-9 is connected to the lower housing 2-6, forming an accommodating compartment (not numbered), in which the battery pack 2-8 is installed. The cover plate 2-10 is detachably connected to the lower housing 2-6.

The lower housing 2-6 is provided with a support post 2-63 extending toward the upper housing 2-5. The top of the support post 2-63 is provided with a protrusion 2-631, and the circuit board 2-4 is correspondingly provided with a positioning hole (not numbered). The protrusion 2-631 is inserted into the positioning hole, thereby fixing and supporting the circuit board 2-4.

When the vehicle-mounted blower 2-100 of the present invention is applied to a lawn mower, the controller 2-200 is mounted on the lawn mower. Through wireless communication between the controller 2-200 and the vehicle-mounted blower 2-100, the vehicle-mounted blower 2-100 can be controlled to change direction. Specifically, the lawn mower is provided with a control lever 2-15, and the controller 2-200 is fixedly mounted on the control lever 2-15 through a clamp 2-16. The controller 2-200 is provided with a first through-hole 2-17, and the clamp 2-16 is correspondingly provided with a second through-hole 2-161. The control lever 2-15 is clamped into the clamp 2-16, and the clamp 2-16 is clamped onto the outer side of the control lever 2-15. The clamp 2-16 is made of an elastic metal material, allowing the control lever 2-15 to be easily clamped in, aligning the first through-hole 2-17 with the second through-hole 2-161. A fastener 2-18 passes through the first through-hole 2-17 and the second through-hole 2-161, fixedly connecting the controller 2-200 to the clamp 2-16, thereby fixedly mounting the controller 2-200 onto the control lever 2-15.

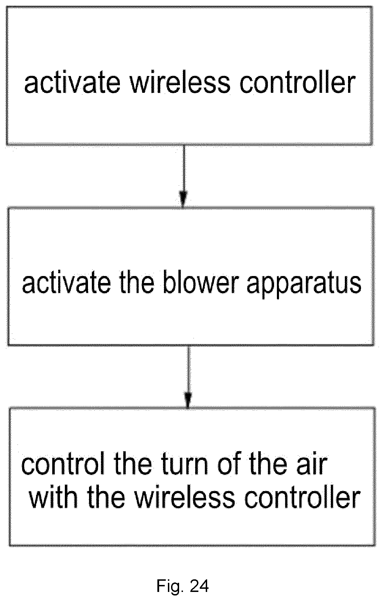

As shown in Fig. 13 to Fig. 14 and Fig. 24, the present invention also provides a control method for the vehicle-mounted blower, comprising the steps of:
- Activating the controller 2-200 and establishing wireless communication between the controller 2-200 and the vehicle-mounted blower 2-100;
- Starting the vehicle-mounted blower 2-100;
- Adjusting the position of the control lever 2-1 along the X-axis and/or Y-axis direction to wirelessly control the direction of the blower pipe 2-12 of the vehicle-mounted blower 2-100.

Specifically, when the control lever 2-1 is moved to the left along the X-axis direction, the blowing tube 2-12 of the car-mounted hair dryer 2-100 rotates to the left; and when the control lever 2-1 is moved to the right along the X-axis direction, the blowing tube 2-12 of the car-mounted hair dryer 2-100 rotates to the right. When the control lever 2-1 is moved upward along the Y-axis direction, the blowing tube 2-12 of the car-mounted hair dryer 2-100 rotates upward; and when the control lever 2-1 is moved downward along the Y-axis direction, the blowing tube 2-12 of the car-mounted hair dryer 2-100 rotates downward.

The car-mounted hair dryer 2-100 is equipped with a steering motor 2-11, which is electrically connected to the control lever 2-1 through a steering control board, controlling the rotation of the blowing tube 2-12 along the X-axis and/or Y-axis directions. The controller 2-200 is equipped with an indicator light 2-71. When the wireless communication between the controller 2-200 and the car-mounted hair dryer 2-100 fails, the indicator light 2-71 flashes intermittently; when the wireless communication between the controller 2-200 and the car-mounted hair dryer 2-100 is successful, the indicator light 2-71 remains steadily lit. Specifically, when the controller 2-200 and the car-mounted hair dryer 2-100 are in an unconnected state, the indicator light 2-71 flashes at 1-second intervals; when entering the pairing state, the indicator light 2-71 flashes rapidly at 100ms intervals; when successfully paired and connected, the indicator light 2-71 remains steadily lit.

In summary, this invention achieves control of the car-mounted hair dryer 2-100's actions by installing a wireless receiver in the car-mounted hair dryer 2-100 and a wireless transmitter in the controller 2-200, and establishing communication between the wireless transmitter and receiver to transmit control signals. Simultaneously, a control lever 2-1 is installed on the controller 2-200 and electrically connected to the wireless transmitter, thereby utilizing the linear movement of the control lever 2-1 along the X-axis and/or Y-axis directions to send control signals to the wireless transmitter, which in turn controls the steering of the car-mounted hair dryer 2-100. Compared to existing technology, this invention employs a wireless control method to adjust the blowing direction of the car-mounted hair dryer 2-100, thus achieving optimal blowing effects while reducing accessory wear and tear.

### THIRD EMBODIMENT

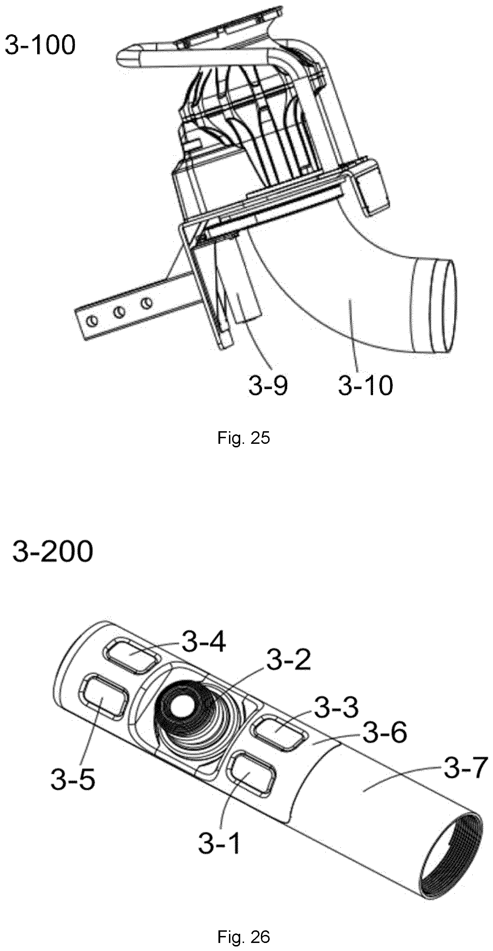

Please refer to Fig. 25-Fig. 26, this invention discloses a car-mounted hair dryer control system, including: a car-mounted hair dryer 3-100, with a built-in wireless receiver (not shown); a controller 3-200, with a built-in wireless transmitter (not shown), which is communicatively connected to the wireless receiver, transmitting control signals to the wireless receiver to control the actions of the car-mounted hair dryer 3-100. The controller 3-200 and the car-mounted hair dryer 3-100 are wirelessly connected. Compared to existing technology, this invention's car-mounted hair dryer 3-100 control system adopts a wireless control method, allowing for unrestricted installation positions of the controller 3-200 and car-mounted hair dryer 3-100, ensuring higher safety during the operation of the car-mounted hair dryer 3-100.

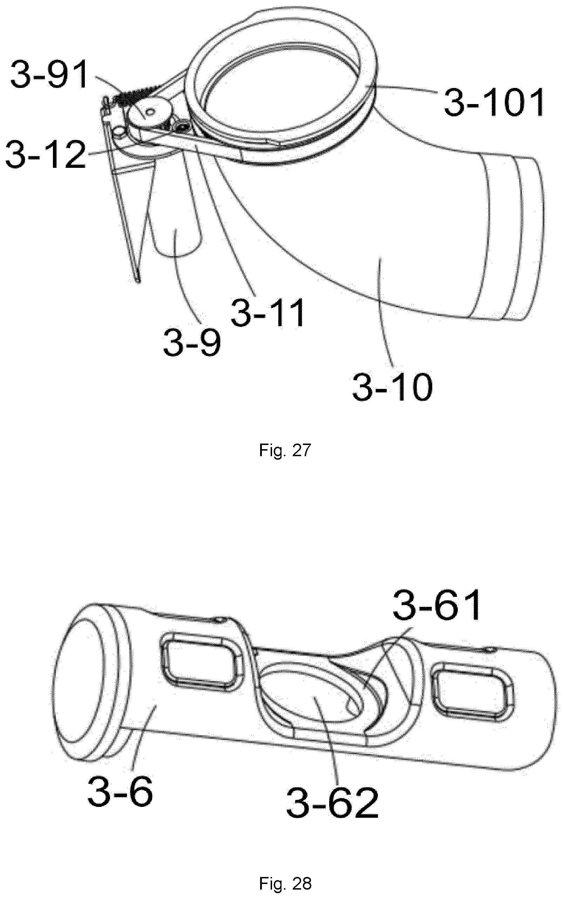

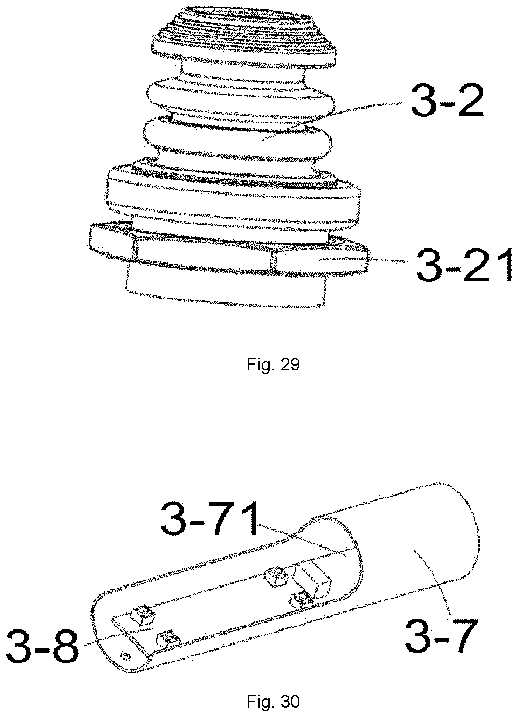

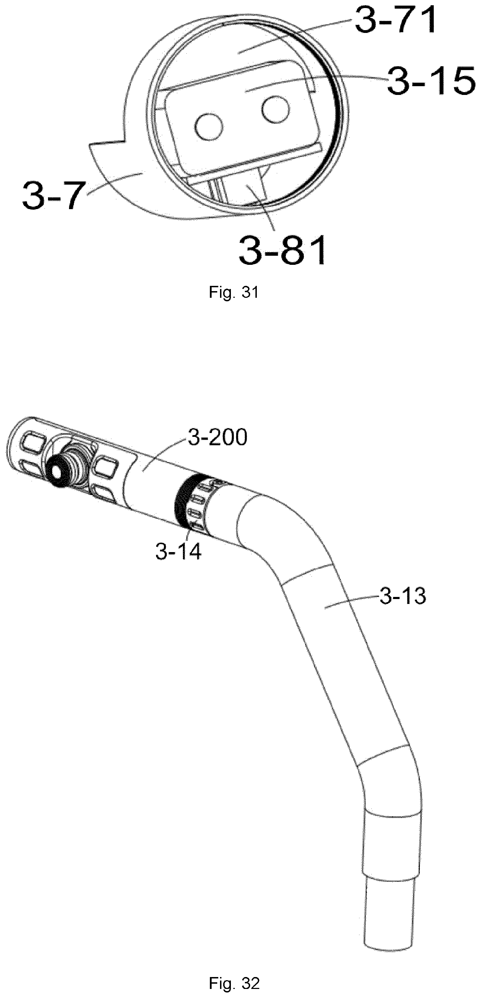

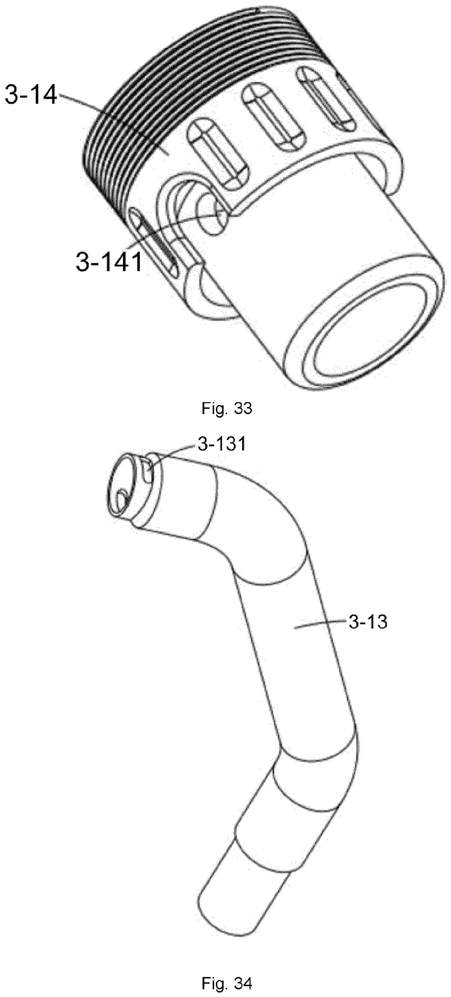

As shown in Fig. 25-Fig. 34, the controller 3-200 is equipped with a speed button 3-1, which is electrically connected to the wireless transmitter, sending speed adjustment signals to the wireless transmitter to regulate the wind speed and volume of the car-mounted hair dryer 3-100. Preferably, the speed button 3-1 has low, medium, and high speed settings, and the controller 3-200 is also equipped with corresponding high-speed indicator light (not shown), medium-speed indicator light (not shown), and low-speed indicator light (not shown), displaying the current speed status of the speed button 3-1. The speed button 3-1 is also configured to send start/stop signals to the wireless transmitter, controlling the start-up or shutdown of the car-mounted hair dryer 3-100. Specifically, the speed button 3-1 also has a zero-speed setting. When the car-mounted hair dryer 3-100 is powered on, the corresponding speed button 3-1 is at the zero-speed setting, and the car-mounted hair dryer 3-100 is not started. A short press of the speed button 3-1 starts the car-mounted hair dryer 3-100 and adjusts it to low, medium, or high speed accordingly. Finally, another short press of the speed button 3-1 turns off the car-mounted hair dryer 3-100, and the speed button 3-1 returns to the zero-speed setting.

The controller is also equipped with a control lever 3-2, which is electrically connected to the wireless transmitter. The control lever 3-2 is configured to move linearly along the X-axis and/or Y-axis directions, sending steering signals to the wireless transmitter to control the direction of the car-mounted hair dryer 3-100, thereby achieving the optimal blowing effect. The controller also has a power button 3-3, controlling the on/off status of the controller 3-200; a reverse button 3-4, controlling the reverse movement of the control lever 3-2 along the X-axis direction; and a pairing button 3-5, controlling the pairing connection between the wireless transmitter and the wireless receiver, enabling wireless connection between the controller 3-200 and the car-mounted hair dryer 3-100. Indicator lights (not shown) are placed below the power button 3-3, reverse button 3-4, and pairing button 3-5 respectively. The speed button 3-1, power button 3-3, reverse button 3-4, and pairing button 3-5 are arranged on both sides of the control lever 3-2. The specific positions of the speed button 3-1, power button 3-3, reverse button 3-4, and pairing button 3-5 are not restricted here.

Specifically, the power button 3-3 controls the connection and disconnection of the power supply, effectively turning the controller 3-200 on or off. When the power is connected, the indicator light below the power button 3-3 remains lit; when the power is off, this light turns off. When the controller 3-200's battery is low, the light source below the power button 3-3 flashes. Since the car-mounted hair dryer 3-100 can be installed in different positions, when it's moved from the front to the back, the left-right swinging direction controlled by the control lever 3-2 will be reversed. A short press of the reverse button 3-4 can adjust the left-right direction of the control lever 3-2. A long press of the pairing button 3-5 puts the controller 3-200 into pairing mode, allowing the wireless transmitter and receiver to pair. The indicator light below the pairing button 3-5 will flash rapidly at 100ms intervals, with a pairing timeout of 30s. When the wireless transmitter and receiver are successfully paired, this light remains steadily lit. After a successful pairing, the controller 3-200 doesn't need to re-pair when next started, unless paired with other devices. In other words, the controller 3-200 can directly control the car-mounted hair dryer 3-100 on its next startup. Compared to existing technology, this eliminates the one-to-one connection between the controller 3-200 and car-mounted hair dryer 3-100, and the wireless communication method can match all machines from the same company with just wireless pairing, further reducing accessory wear.

The controller 3-200 includes an assembled upper shell 3-6 and lower shell 3-7. The wireless transmitter is housed in the space (unnumbered) enclosed by these shells. The upper shell 3-6 has a concave installation part 3-61, with an installation opening 3-62 at its bottom. The control lever 3-2 passes through this opening and is positioned within the installation part 3-61. The bottom of the control lever 3-2 has a positioning piece 3-21, which is fixed to the upper shell 3-6, securing the control lever 3-2 to the upper shell 3-6. The controller 3-200 contains a circuit board 3-8 with the integrated wireless transmitter. The car-mounted hair dryer has a control board (not shown) with the integrated wireless receiver. The circuit board 3-8 has a support 3-81 on the side facing the lower shell 3-7, which supports it against the inner wall of the lower shell 3-7.

Specifically, the car-mounted hair dryer 3-100 is equipped with a steering motor 3-9 and a blowing tube 3-10. The steering motor 3-9 is electrically connected to the control board and has a drive wheel 3-91 at one end, driven by the steering motor 3-9. The blowing tube 3-10 is arc-shaped and has a driven wheel 3-101 at one end. The drive wheel 3-91 and driven wheel 3-101 are connected by a synchronous belt 3-11. The car-mounted hair dryer 3-100 also has a tensioning wheel 3-12 positioned between the drive wheel 3-91 and driven wheel 3-101, contacting the synchronous belt 3-11 to adjust its tension, enabling the drive wheel 3-91 to drive the driven wheel 3-101 via the synchronous belt 3-11. The specific structure of the car-mounted hair dryer 3-100 follows existing technology and won't be described in detail here.

In this embodiment, the car-mounted hair dryer 3-100 can be equipped with either one or two sets of steering motors 3-9, both using a synchronous belt 3-11 to enable the drive wheel 3-91 to rotate the driven wheel 3-101. With one steering motor 3-9 controlling the blowing tube 3-10's direction, it can rotate up-down (Y-axis) or left-right (X-axis). With two steering motors 3-9, the blowing tube 3-10 can rotate simultaneously in both up-down (Y-axis) and left-right (X-axis) directions.

The control lever 3-2 is electrically connected to the circuit board 3-8. The control lever 3-2 sends control signals to the wireless transmitter, which then transmits these signals to the wireless receiver. The wireless receiver receives the control signals, and the steering control board controls the rotation of the steering motor 3-9. The steering motor 3-9 drives the rotation of the drive wheel 3-91, which controls the rotation of the driven wheel 3-101 via the synchronous belt 3-11, thereby controlling the direction of the blowing tube 3-10, enabling it to rotate along the X-axis and/or Y-axis directions. The specific adjustment method can be: when the control lever 3-1 moves left along the X-axis direction, the blowing tube 3-10 correspondingly rotates left; when the control lever 3-1 moves right along the X-axis direction, the blowing tube 3-10 rotates right. Similarly, when the control lever 3-1 moves up along the Y-axis direction, the blowing tube 3-10 rotates upward; when the control lever 3-1 moves down along the Y-axis direction, the blowing tube 3-10 rotates downward. By using the control lever 3-1 to control the rotation of the steering motor 3-9 through the steering control board, the left-right and up-down rotation of the blowing tube 3-10 is achieved, increasing the blowing range with simple and convenient operation.

When this invention's car-mounted hair dryer 3-100 is applied to a lawn mower, the controller 3-200 is installed on the lawn mower. Through wireless communication between the controller 3-200 and the car-mounted hair dryer 3-100, the direction of the car-mounted hair dryer 3-100 can be controlled. Specifically, the lawn mower is equipped with a control handle 3-13, and the controller 3-200 is fixed to the control handle 3-13 via a connecting tube 3-14. One end of the connecting tube 3-14 is threaded to the controller 3-200, while the other end is fixed to the control handle 3-13 with fastening screws (unnumbered), securing the controller 3-200 to the control handle 3-13. Specifically, the connecting tube 3-14 is inserted and fixed at one end of the control handle 3-13. The connecting tube 3-14 has a first through-hole 3-141, and the control handle 3-13 has a second through-hole 3-131. The first through-hole 3-141 and the second through-hole 3-131 are aligned, and fastening screws pass through both holes to fix the connecting tube 3-14 to the control handle 3-13. The controller 3-200 contains a battery pack 3-15. The lower shell 3-7, near the end close to the control handle 3-13, has a storage compartment 3-71 where the battery pack 3-15 is installed.

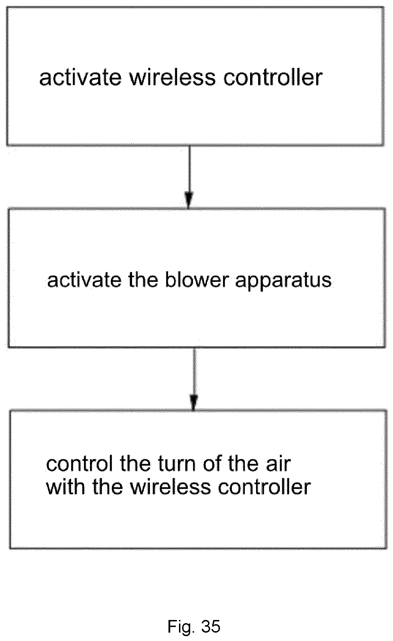

As shown in Fig. 25-Fig. 26 and Fig. 35, this invention also provides a control method for a car-mounted hair dryer, including:
Starting the controller 3-200 and establishing wireless communication between the controller 3-200 and the car-mounted hair dryer 3-100;
Starting the car-mounted hair dryer 3-100;
Adjusting the speed button 3-1 to wirelessly control the wind speed and volume of the car-mounted hair dryer 3-100.

Specifically, the speed button 3-1 has low, medium, and high speed settings. Below the speed button 3-1 are high-speed, medium-speed, and low-speed indicator lights. When the speed button 3-1 adjusts the output speed of the car-mounted hair dryer 3-100, the corresponding indicator light turns on. The car-mounted hair dryer control method also includes: adjusting the position of the control lever 3-2 along the X-axis and/or Y-axis to wirelessly control the direction of the blowing tube 3-10 of the car-mounted hair dryer 3-100; adjusting the reverse button 3-4 to control the reverse movement of the control lever 3-2 along the X-axis direction.

Specifically, when the control lever 3-2 is moved to the left along the X-axis direction, the blowing tube 3-10 of the car-mounted hair dryer 3-100 rotates to the left; and when the control lever 3-2 is moved to the right along the X-axis direction, the blowing tube 3-10 rotates to the right. When the control lever 3-2 is moved upward along the Y-axis direction, the blowing tube 3-10 rotates upward; and when the control lever 3-2 is moved downward along the Y-axis direction, the blowing tube 3-10 rotates downward. The car-mounted hair dryer 3-100 is equipped with a steering motor 3-9, which is electrically connected to the control lever 3-2 through a control board, controlling the rotation of the blowing tube 3-10 along the X-axis and/or Y-axis directions.

In summary, this invention achieves control of the car-mounted hair dryer 3-100's actions by installing a wireless receiver in the car-mounted hair dryer 3-100 and a wireless transmitter in the controller 3-200, establishing communication between them to transmit control signals to the wireless receiver. Additionally, by installing a speed button 3-1 on the controller 3-200 that is electrically connected to the wireless transmitter, speed adjustment signals can be sent to the wireless transmitter using the speed button 3-1, thereby adjusting the wind speed and volume of the car-mounted hair dryer 3-100. Compared to existing technology, this invention's car-mounted hair dryer control system employs a wireless control method to adjust the wind speed and volume of the car-mounted hair dryer 3-100, achieving optimal blowing effects while reducing accessory wear and tear.

### FOURTH EMBODIMENT

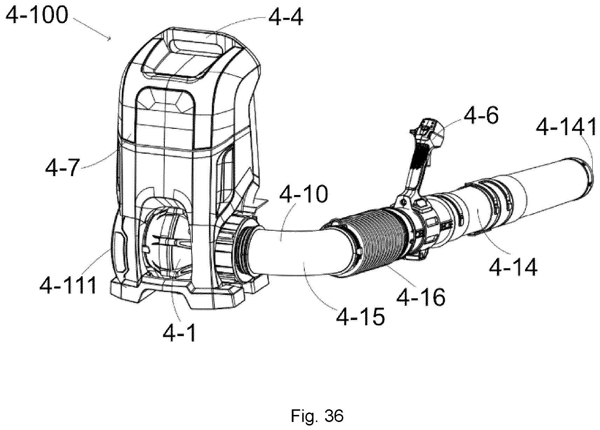

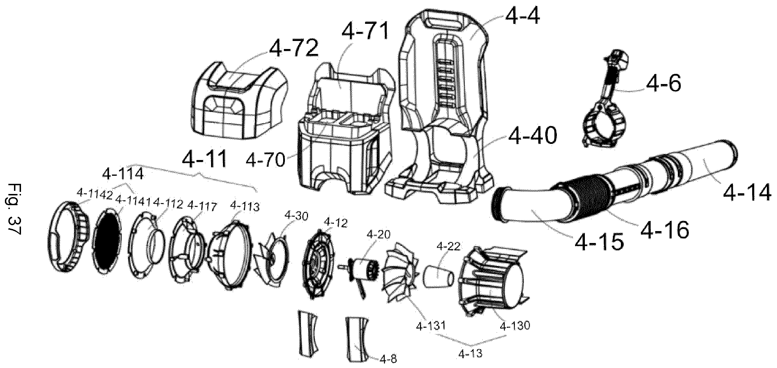

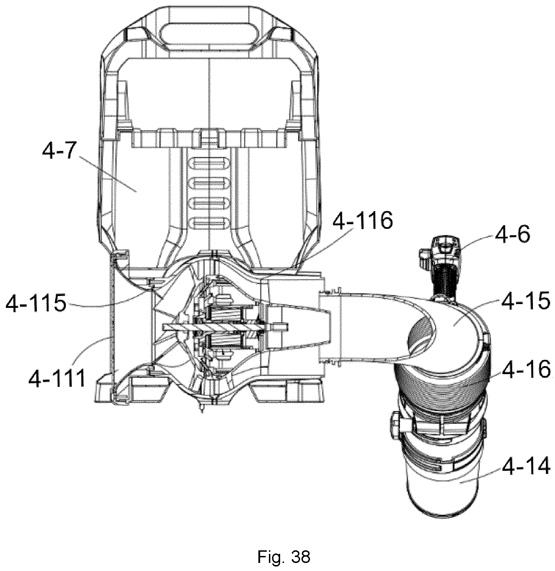

Please refer to Fig. 36 to Fig. 38, this utility model discloses a backpack-style blower 4-100, designed for use as a backpack. The backpack-style blower 4-100 includes a blowing assembly 4-1, a power assembly 4-7, and a backplate 4-4. One side of the backplate 4-4 is designed to fit against the user's back for carrying, while the other side has an assembly slot 4-40. One end of the blowing assembly 4-1 is assembled within the assembly slot 4-40, with the other end positioned outside the backplate 4-4 for blowing outward. The power assembly 4-7 is assembled on the backplate 4-4 and positioned above the blowing assembly 4-1 to supply power to it.

Preferably, the extended surface of the backplate 4-4 is perpendicular to the plane of the blowing assembly 4-1. That is, the backplate 4-4 extends along a vertical plane, while the blowing assembly 4-1 extends along a horizontal plane. This design maximizes contact with the user to ensure secure fastening while achieving effective frontal blowing.

The power assembly 4-7 includes a power cavity body 4-71 and a power cover 4-72. The power cavity body 4-71 is fixed to the backplate 4-4, and inside the power cavity body 4-71 is a power cavity 4-70 for housing the battery pack (not shown). The power cover 4-72 is used to enclose the power cavity 4-70.

The backpack-style blower 4-100 also includes a bracket 4-8 used to secure the blowing assembly 4-1 and the backplate 4-4. The assembly slot 4-40 is a U-shaped groove. After the blowing assembly 4-1 is assembled into the assembly slot 4-40 of the backplate 4-4, the bracket 4-8 constrains at least a portion of the blowing assembly 4-1 within the assembly slot 4-40. Preferably, the bracket 4-8 is a metal bracket to enhance the structural strength of the backplate 4-4.

The blowing assembly 4-1 includes a housing 4-10 and a fan assembly contained within the housing 4-10. At least part of the housing 4-10 is assembled in the assembly slot 4-40, and includes an air intake pipe 4-11, a bend pipe 4-15, an air outlet pipe 4-14, and a flexible pipe 4-16 connecting the bend pipe 4-15 and the air outlet pipe 4-14. The air intake pipe 4-11 is assembled in the assembly slot 4-40, and the extension direction of the air intake pipe 4-11 is approximately perpendicular to the extension direction of the air outlet pipe 4-14. The flexible pipe 4-16 allows adjustment of the blowing direction according to actual needs, expanding the blowing area.

The housing 4-10 has an air inlet 4-111 and an air outlet 4-141. The air inlet 4-111 is located on the air intake pipe 4-11, and the air outlet 4-141 is located on the air outlet pipe 4-14. The fan assembly is positioned at the air inlet 4-111, so that when operating, it can drive external airflow to enter the interior of the housing 4-10 through the air inlet 4-111.

In this embodiment, the air intake pipe 4-11 includes a guiding part 4-112 and an upper cover 4-113 connected to the guiding part 4-112. The air inlet 4-111 is formed on the guiding part 4-112. One end of the upper cover 4-113 is connected to the side of the guiding part 4-112 away from the air inlet 4-111, and the other end is connected to the upper duct 4-12. The fan blade 4-30 is assembled inside the upper cover 4-113. When the fan blade 4-30 rotates, external airflow enters through the air inlet 4-111 and flows into the upper cover 4-113 after passing through the guiding part 4-112.

In this embodiment, the air intake pipe 4-11 also includes a fixed seat 4-117 used to support and fix the guiding part 4-112. This fixed seat 4-117 is used to securely connect the guiding part 4-112 with the upper cover 4-113, while also enhancing the structural strength of the guiding part 4-112. Of course, in other embodiments, the fixed seat 4-117 may be omitted, and the guiding part 4-112 can be made directly from materials with higher structural strength. In this case, the guiding part 4-112 can be directly fixed to the upper cover 4-113, without limitation.

The air intake pipe 4-11 also includes a mesh cover assembly 4-114, which is connected to the air inlet 4-111 side of the guiding part 4-112. The other end of the guiding part 4-112 is fixed to the upper cover 4-113. The filter screen 4-1141 on the mesh cover assembly 4-114 can filter the incoming external airflow. Preferably, in this embodiment, the mesh cover assembly 4-114 is formed by assembling a filter screen 4-1141 and a filter screen fixed seat 4-1142. The filter screen 4-1141 is used to filter the external airflow, making the airflow entering the blowing assembly 4-1 cleaner. The filter screen fixed seat 4-1142 is used to secure the filter screen 4-1141, limiting it between the filter screen fixed seat 4-1142 and the guiding part 4-112. Of course, in other embodiments, the filter screen 4-1141 and the filter screen fixed seat 4-1142 can also be integrated, as long as they can be fixed to the guiding part 4-112 and serve the filtering function, without limitation.

The bend pipe 4-15 is at least partially located on the outside of the backplate 4-4, so that the air outlet pipe 4-14 is also on the outside of the backplate 4-4. The air outlet pipe 4-14 preferably extends horizontally to the side of the backplate 4-4, which places the air outlet pipe 4-14 near the user's hand for easier use.

In this embodiment, the backpack-style blower 4-100 also includes a handle assembly 4-6 mounted on the air outlet pipe 4-14. The handle assembly 4-6 can be gripped by the operator to adjust the blowing direction. The vertical distance between the handle assembly 4-6 and the backplate 4-4 should consider the habitual distance when a person extends their arm, to facilitate easier operation. Of course, several control switches can also be set on the handle assembly 4-6 to control the start/stop and wind speed of the blowing assembly 4-1.

The fan assembly includes a fan blade 4-30 and a motor 4-20 connected to the fan blade 4-30. The housing 4-10 is through-connected along its axial direction. The motor 4-20 is configured to drive the fan blade 4-30 to rotate, generating airflow through the housing 4-10.

The fan blade 4-30 and the motor 4-20 are contained within the housing 4-10 and positioned between the air inlet 4-111 and the air outlet 4-141; preferably, the fan blade 4-30 is located at the air inlet 4-111. Between the air intake pipe 4-11 and the air outlet pipe 4-14, there are interconnected upper duct 4-12 and lower duct 4-13, with the upper duct 4-12 connected to the air intake pipe 4-11, and the lower duct 4-13 connected to the air outlet pipe 4-14.

Specifically, the upper duct 4-12 is conically shaped, gradually narrowing towards the air inlet 4-111, while the lower duct 4-13 is conically shaped, gradually narrowing towards the air outlet 4-141. This design helps direct the airflow in the axial direction. In other words, external air enters parallel to the axial direction from the air inlet 4-111, and after passing through the rotating fan blade 4-30, the airflow moves along the upper duct 4-12 at an angle to the axial direction. It then flows along the lower duct 4-13 to exit parallel to the axial direction, achieving guided airflow direction.

Preferably, in the airflow direction, the air intake pipe 4-11, the upper duct 4-12, and the lower duct 4-13 together form a structure that first concaves, then convexes, then concaves again. The power assembly extends at least partially into the concave areas. This configuration makes the structure of the backpack-style blower 4-100 more compact.

Specifically, the guiding part 4-112 is conically shaped, gradually narrowing towards the air outlet 4-141, while the upper cover 4-113 is conically shaped, gradually narrowing towards the air inlet 4-111, thus forming a first concave 4-115 at the connection between the guiding part 4-112 and the upper cover 4-113. The outer diameter of the lower duct 4-13 near the upper duct 4-12 is larger than its outer diameter near the air outlet pipe 4-14, thus forming a second concave 4-116 on the outer periphery of the lower duct 4-13. These concaves 4-115 and 4-116 can accommodate other components, making the structure of the backpack-style blower 4-100 more compact.

The minimum diameter of the air intake pipe 4-11 is smaller than the diameter of the air inlet 4-111, meaning the entrance of the air intake pipe 4-11 concaves inward, increasing the air intake volume.

Specifically, there is a first gap 4-101 between the outer edge of the fan blade 4-30 and the inner wall of the air intake pipe 4-11, with the minimum distance between them ranging from 0.3 to 3mm.

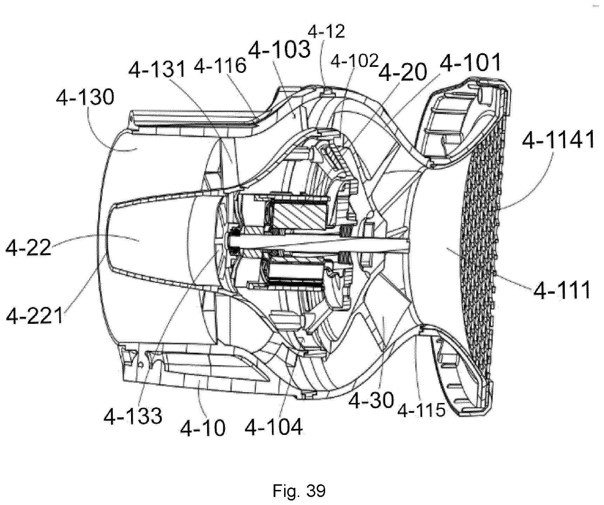

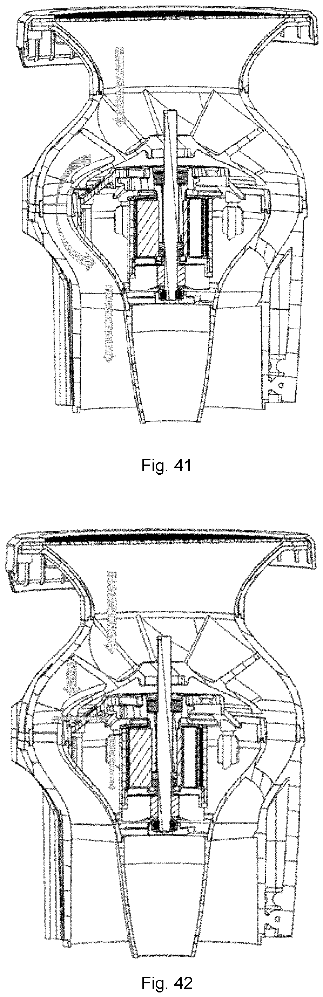

Please refer to Fig. 39 and Fig. 42, to further enhance airflow and cool the motor 4-20, the backpack-style blower 4-100 is equipped with a first air channel 4-103 and a second air channel 4-104. The second air channel 4-104 passes through the motor 4-20, allowing the airflow entering this channel to cool the motor 4-20.

It's understood that since the motor 4-20 must be positioned at the axis of the housing 4-10, the second air channel 4-104 extends along this axis. The first air channel 4-103 is formed surrounding the outer periphery of the second air channel 4-104. Thus, when the motor 4-20 rotates, external air can enter the housing 4-10 through the air inlet 4-111, with part flowing towards the air outlet 4-141 through the first air channel 4-103, and part passing through the motor 4-20 via the second air channel 4-104 towards the air outlet 4-141, carrying away heat from the motor 4-20.

The upper duct 4-12 has a first passage 4-121 connecting to the first air channel 4-103 and a second passage 4-122 connecting to the second air channel 4-104. The first passage 4-121 is formed around the periphery of the second passage 4-122. In other words, the first passage 4-121 is a first opening near the outer edge of the upper duct 4-12, passing through both sides of the upper duct 4-12, connecting the internal space of the air intake pipe 4-11 with that of the lower duct 4-13. The second passage 4-122 is a second opening near the center of the upper duct 4-12, also passing through both sides, connecting the internal space of the air intake pipe 4-11 with the space around the motor 4-20. This allows the airflow from the air inlet 4-111 to split into two streams, flowing out from the first passage 4-121 and the second passage 4-122 respectively, and continuing into the lower duct 4-13.

Preferably, the ratio of the radial length of the first air channel 4-103 in the upper duct 4-12 to the outer diameter of the fan blade 4-30 is greater than 0.05, and the ratio of the diameter of the air outlet 4-141 to the outer diameter of the fan blade 4-30 is greater than 0.15, which not only facilitates air intake but also ensures stable wind speed.

Preferably, there's a second gap 4-102 between the upper duct 4-12 and the fan blade 4-30, keeping the distance between them greater than or equal to 2mm. Of the external air flowing into the air intake pipe 4-11, part enters the first air channel 4-103 through the first passage 4-121, while another part enters the second passage 4-122 through the second gap 4-102, and then flows through the second air channel 4-104 via the second passage 4-122. Of course, in other embodiments, connecting pieces could be used to separate the first passage 4-121 and the second passage 4-122, without limitation.

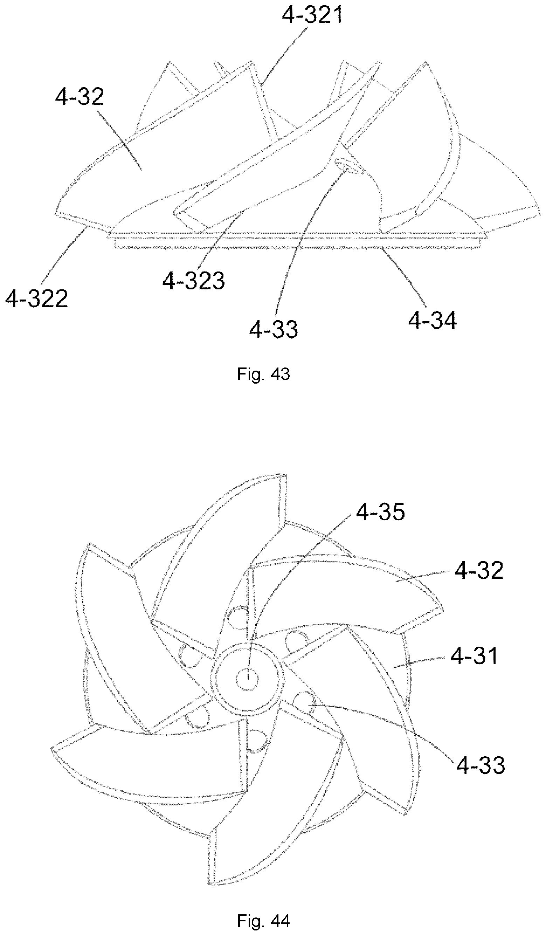

Please refer to Fig. 43 and Fig. 44, in other embodiments, the base 4-31 also has air passage holes 4-33 located between adjacent blades 4-32. There are 6 air passage holes 4-33 set near the axis of the fan blade 4-30. The opening direction of the air passage holes 4-33 is parallel to the axial direction of the fan blade 4-30, used to connect the air inlet 4-111 and the second passage 4-122.

In other words, in this embodiment, the second air channel 4-104 is formed by the air passage holes 4-33, the second passage 4-122, the through-hole 4-133, and the flow guide cone 4-22. The extension direction of the second air channel 4-104 is parallel to the axial direction of the fan blade 4-30. Thus, of the airflow entering the air intake pipe 4-11, part enters the flow channel formed on the outer peripheral wall of the guide vane 4-131 through the first passage 4-121, and part flows in through the air passage holes 4-33, then enters the guide vane 4-131 and the flow guide cone 4-22 via the second passage 4-122, and finally flows towards the air outlet 4-141.

The fan blade 4-30 also includes an extended edge 4-34 that extends towards the upper duct 4-12. The extended edge 4-34 is set around the base 4-31 and extends away from the blades 4-32. The orthographic projection of the extended edge 4-34 on the upper duct 4-12 partially overlaps with the upper duct 4-12, allowing the extended edge 4-34 to extend into the upper duct 4-12 and connect with its stop. Since the upper duct 4-12 is fixed and doesn't rotate, the fan blade 4-30 can rotate relative to the upper duct 4-12. Therefore, the extended edge 4-34 can prevent airflow from entering the second air channel 4-104 through the gap between the fan blade 4-30 and the upper duct 4-12.

In summary, the backpack-style blower 4-100 of this utility model uses a mixed-flow fan blade. External air enters parallel to the axial direction from the air inlet 4-111, and after passing through the rotating fan blade 4-30, the airflow moves along the upper duct 4-12 at an angle to the axial direction. It then flows along the lower duct 4-13 to exit parallel to the axial direction, achieving guided airflow direction. That is, the mixed-flow fan blade 4-30 of this utility model gives the passing airflow both axial and radial components. Additionally, by setting the angle between the first edge 4-321 of the blade 4-32 and the axial direction of the base 4-31 to be less than or equal to 80°, and by setting up the first air channel 4-103 and the second air channel 4-104, when the motor 4-20 rotates, part of the external air entering from the air inlet 4-111 can flow towards the air outlet 4-141 along the first air channel 4-103, and part can flow through the motor 4-20 towards the air outlet 4-141 along the second air channel 4-104, carrying away heat from the motor 4-20. Compared to existing technology, this utility model can achieve higher thrust at lower rotational speeds, reduce noise, enhance the cooling effect on the motor 4-20, and improve operational efficiency.

### FIFTH EMBODIMENT

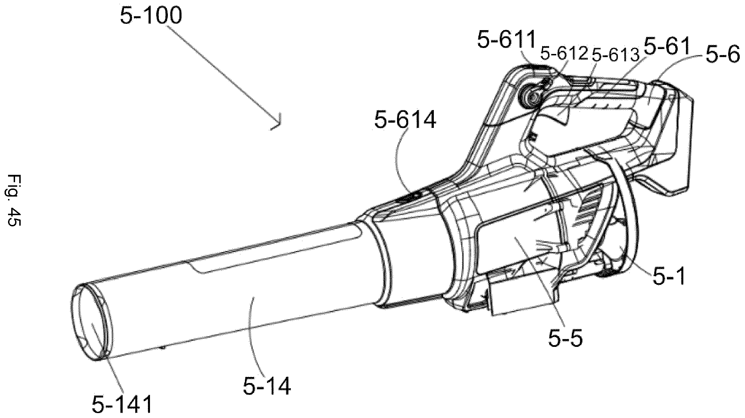

Please refer to Fig. 45, which shows a handheld hair dryer 5-100 for handheld use. The handheld hair dryer 5-100 includes a housing assembly 5-5, a grip handle 5-6, and a blowing assembly 5-1. The grip handle 5-6 is connected to the housing assembly 5-5 for the operator to hold.

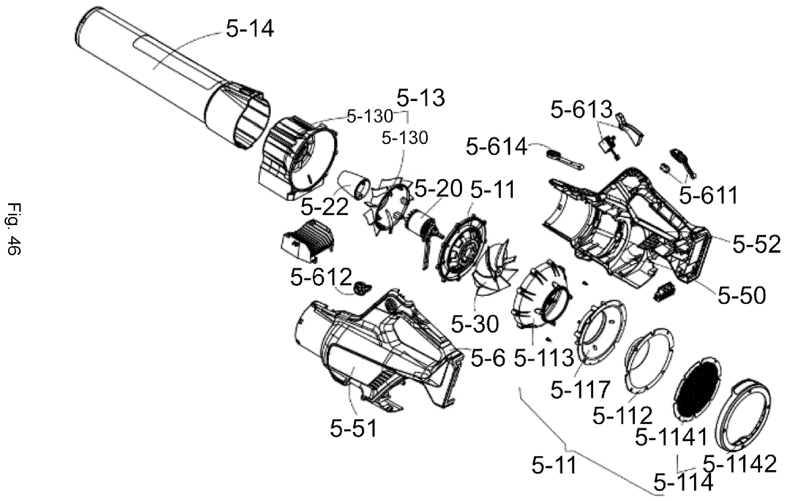

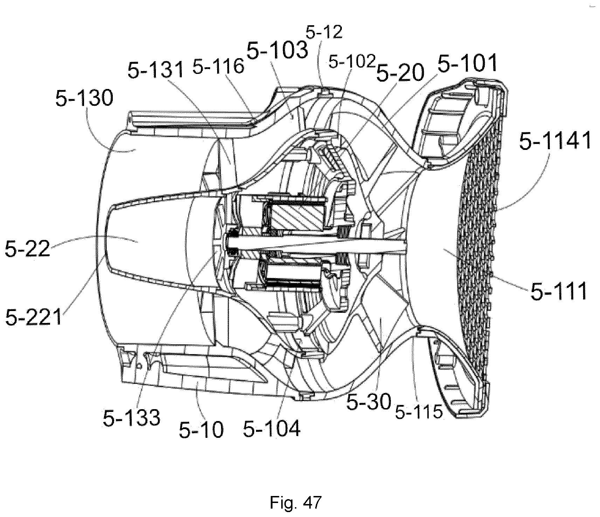

As shown in Fig. 46 and Fig. 47, the housing assembly 5-5 includes a first housing 5-51 and a second housing 5-52 that are assembled together. After the first housing 5-51 and the second housing 5-52 are assembled, they form an assembly slot 5-50. At least part of the blowing assembly 5-1 is assembled in the assembly slot 5-50 to blow air outward.

The blowing assembly 5-1 includes a shell 5-10, a fan blade 5-30, and a motor 5-20. The shell 5-10 has an air inlet 5-111. The fan blade 5-30 and the motor 5-20 are both enclosed in the shell 5-10, with the fan blade 5-30 located at the air inlet 5-111. One end of the motor 5-20 is connected to the fan blade 5-30 to drive the fan blade 5-30 to rotate.

In this embodiment, the air inlet 5-111 is exposed outside the housing assembly 5-5, allowing external airflow to enter the interior of the housing assembly 5-5 through the air inlet 5-111. Of course, in other embodiments, the air inlet 5-111 can also be set inside the housing assembly 5-5, as long as the air inlet 5-111 can connect to the external air.

The shell 5-10 includes an air intake tube 5-11, with the air inlet 5-111 set on the air intake tube 5-11. The air intake tube 5-11 includes a guiding part 5-112 and an upper cover 5-113 connected to the guiding part 5-112. The air inlet 5-111 is formed on the guiding part 5-112. One end of the upper cover 5-113 is connected to the side of the guiding part 5-112 away from the air inlet 5-111, and the other end is connected to the upper duct 5-12. The fan blade 5-30 is assembled inside the upper cover 5-113. When the fan blade 5-30 rotates, external airflow enters through the air inlet 5-111 and flows into the upper cover 5-113 through the guiding part 5-112.

The guiding part 5-112 is set in a conical shape that gradually narrows towards the air outlet 5-141, and the upper cover 5-113 is set in a conical shape that gradually narrows towards the air inlet 5-111, thereby forming a first recess 5-115 at the connection between the guiding part 5-112 and the upper cover 5-113. The outer diameter of the lower duct 5-13 on the side close to the upper duct 5-12 is larger than the outer diameter on the side close to the air outlet tube 5-14, thereby forming a second recess 5-116 on the outer periphery of the lower duct 5-13. The first recess 5-115 and the second recess 5-116 can accommodate other components, making the structure of the handheld hair dryer 5-100 more compact.

In this embodiment, the air intake tube 5-11 also includes a fixing seat 5-117 for fixing the guiding part 5-112. This fixing seat 5-117 is used to fixedly connect the guiding part 5-112 with the upper cover 5-113, while also serving to increase the structural strength of the guiding part 5-112. Of course, in other embodiments, the fixing seat 5-117 may not be provided, and the guiding part 5-112 can be made directly from materials with higher structural strength. In this case, the guiding part 5-112 can be directly fixed to the upper cover 5-113, which is not limited here.

The air intake tube 5-11 also includes a mesh cover assembly 5-114, which is connected to the air inlet 5-111 side of the guiding part 5-112. The other end of the guiding part 5-112 is fixedly connected to the upper cover 5-113. The filter mesh 5-1141 on the mesh cover assembly 5-114 can filter the incoming external airflow. Preferably, in this embodiment, the mesh cover assembly 5-114 is formed by assembling a filter mesh 5-1141 and a filter mesh fixing seat 5-1142. The filter mesh 5-1141 is used to filter the external airflow, making the airflow entering the blowing assembly 5-1 cleaner. The filter mesh fixing seat 5-1142 is used to fix the filter mesh 5-1141, limiting the filter mesh 5-1141 between the filter mesh fixing seat 5-1142 and the guiding part 5-112. Of course, in other embodiments, the filter mesh 5-1141 and the filter mesh fixing seat 5-1142 can also be integrally set, as long as they can be fixed to the guiding part 5-112 and serve the filtering purpose, which is not limited here.

The minimum diameter of the air intake tube 5-11 is smaller than the diameter of the air inlet 5-111, meaning that the entrance of the air intake tube 5-11 is concave inward, thereby increasing the air intake volume.

Specifically, there is a first gap 5-101 between the outer edge of the fan blade 5-30 and the inner wall surface of the air intake tube 5-11, making the minimum distance between the outer edge of the fan blade 5-30 and the inner wall surface of the air intake tube 5-11 between 0.3-3mm.

The handheld hair dryer 5-100 also includes an air outlet tube 5-14 connected to the housing assembly 5-5. The air outlet tube 5-14 is located on the side of the blowing assembly 5-1 away from the air inlet 5-111 and has an air outlet 5-141. When the blowing assembly 5-1 is operating, external airflow enters the interior of the housing assembly 5-5 through the air inlet 5-111, passes through the blowing assembly 5-1 and the air outlet tube 5-14, and then is discharged from the air outlet 5-141.

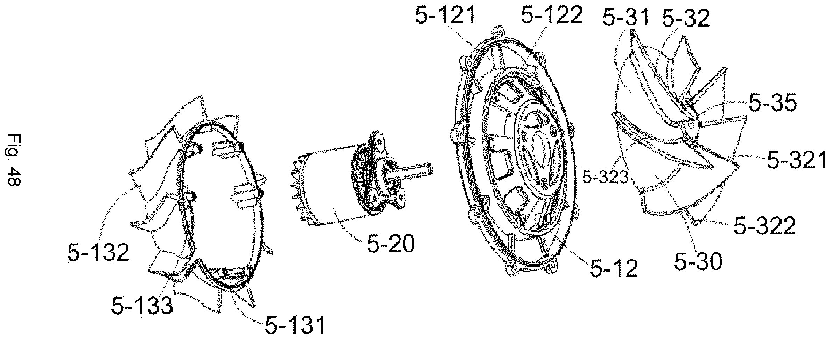

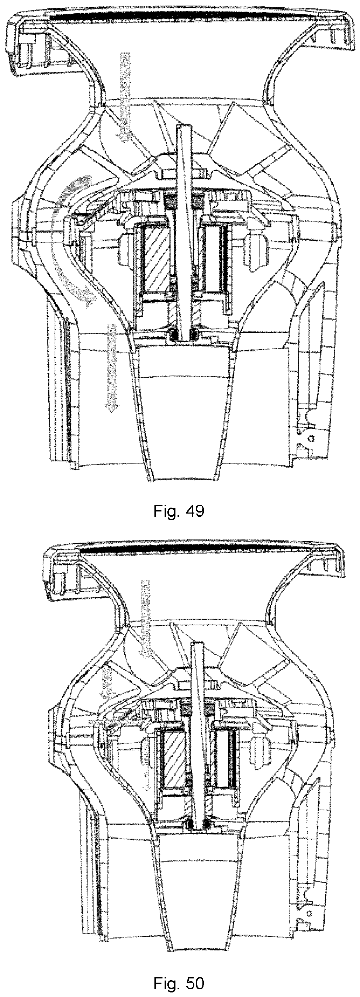

Please refer to Fig. 47 to Fig. 50, the blowing assembly 5-1 has a first air flow channel 5-103 and a second air flow channel 5-104. The second air flow channel 5-104 passes through the motor 5-20, while the first air flow channel 5-103 surrounds the outer periphery of the second air flow channel 5-104 and is close to the inner wall surface of the shell 5-10.

The shell 5-10 also includes a duct assembly connected to the air intake tube 5-11. The duct assembly has a first channel 5-121 communicating with the first air flow channel 5-103 and a second channel 5-122 communicating with the second air flow channel 5-104. The first channel 5-121 is formed on the outer periphery of the second channel 5-122. In other words, the blowing assembly 5-1 has two air flow channels, one of which can pass through the motor 5-20. Therefore, the motor 5-20 has better heat dissipation, allowing for a wider range of power options when designing the motor 5-20, and resulting in superior air output performance.

Specifically, the duct assembly includes an upper duct 5-12 and a lower duct 5-13 that are connected to each other. The upper duct 5-12 is connected to the air intake tube 5-11, while the lower duct 5-13 is set close to the air outlet tube 5-14 and extends towards the air outlet 5-141. Both the first channel 5-121 and the second channel 5-122 are formed on the upper duct 5-12.

The upper duct 5-12 is set in a conical shape that gradually narrows towards the air inlet 5-111, while the lower duct 5-13 is set in a conical shape that gradually narrows towards the air outlet 5-141. This setup makes it easier for the upper duct 5-12 to be fixed to the air intake tube 5-11, while the lower duct 5-13 can guide the airflow. At the same time, it can also guide the airflow in the axial direction. In other words, the external airflow enters parallel to the axial direction from the air inlet 5-111, and after the fan blade 5-30 rotates, the airflow flows at a certain angle to the axial direction along the upper duct 5-12, then flows back parallel to the axial direction along the lower duct 5-13, achieving the guidance of the airflow direction.

Preferably, the ratio of the radial length of the first air flow channel 5-103 in the upper duct 5-12 to the outer diameter of the fan blade 5-30 is greater than 0.05, and the ratio of the diameter of the air outlet 5-141 to the outer diameter of the fan blade 5-30 is greater than 0.15, which is not only conducive to air intake but also ensures stable wind speed.

The lower duct 5-13 includes a lower duct shell 5-130 fixedly connected to the upper duct 5-12 and a guide vane 5-131 enclosed in the lower duct shell 5-130. The guide vane 5-131 has fan blades 5-132 that spiral towards the air outlet 5-141, forming flow channels between adjacent fan blades 5-132. These flow channels are connected to the first channel 5-121. In other words, the airflow entering the first air flow channel 5-103 flows along the flow channels between adjacent fan blades 5-132 on the guide vane 5-131 after entering the lower duct 5-13 through the first channel 5-121, thus realizing the guiding function of the lower duct 5-13.

In this embodiment, a through-hole 5-133 is set at the axis of the guide vane 5-131, and this through-hole 5-133 is connected to the second channel 5-122. Therefore, after the airflow entering the second air flow channel 5-104 enters the lower duct 5-13 along the second channel 5-122, it can flow through the through-hole 5-133, thus completely defining the two air flow paths of the handheld hair dryer 5-100.

A flow guide cone 5-22 is connected to the side of the guide vane 5-131 facing the air outlet 5-141. The radius of the flow guide cone 5-22 gradually decreases along the airflow direction of the second air flow channel 5-104. The flow guide cone 5-22 has an opening 5-221 for air to flow out. The airflow in the first air flow channel 5-103 flows along the outer surface of the flow guide cone 5-22 towards the air outlet 5-141. The second channel 5-122, the through-hole 5-133, and the opening 5-221 are connected in sequence. The first air flow channel 5-103 and the second air flow channel 5-104 are connected at the opening 5-221.

The second air flow channel 5-104 includes a first part and a second part. The first part is located between the fan blade 5-30 and the upper duct 5-12. The second part is formed by the second channel 5-122, the guide vane 5-131, and the flow guide cone 5-22. The first part and the second part are connected at the second channel 5-122.

Specifically, there is a second gap 5-102 between the upper duct 5-12 and the fan blade 5-30, making the distance between the fan blade 5-30 and the upper duct 5-12 greater than or equal to 2mm. The first part is formed in this second gap 5-102. Of the external airflow entering the air intake tube 5-11, one part enters the first air flow channel 5-103 through the first channel 5-121, while another part enters the second channel 5-122 through the second gap 5-102, and flows in the second air flow channel 5-104 through the second channel 5-122. Of course, in other embodiments, a connecting piece can be set to separate the first channel 5-121 and the second channel 5-122, which is not limited here.

The fan blade 5-30 is a mixed-flow fan blade. The fan blade 5-30 includes a base 5-31 and blades 5-32 spirally extending from the center of the base 5-31. Preferably, there are 6 blades 5-32. A pivot hole 5-35 is set at the axis of the base 5-31, and the motor 5-20 passes through the pivot hole 5-35 to drive the base 5-31 to rotate.

Preferably, the blade 5-32 has a first edge 5-321, a second edge 5-322, and a third edge 5-323 connected to the base 5-31. The blade 5-32 extends towards the air inlet 5-111, that is, both the first edge 5-321 and the second edge 5-322 extend towards the air inlet 5-111. The first edge 5-321 is vertically set on the base 5-31 and close to the axis of the base 5-31. The second edge 5-322 is also vertically set on the base 5-31 but away from the axis of the base 5-31. The two ends of the third edge 5-323 are connected to the first edge 5-321 and the second edge 5-322 respectively. The angle between the extension direction of the first edge 5-321 and the axial direction of the base 5-31 is less than or equal to 80°, forming a concave space at the air inlet 5-111, which is conducive to increasing the air intake volume. The angle between the extension direction of the third edge 5-323 and the axial direction of the base 5-31 is less than 90°, to guide the airflow into the air outlet tube 5-14 under the action of the shell 5-10 and the lower duct 5-13.

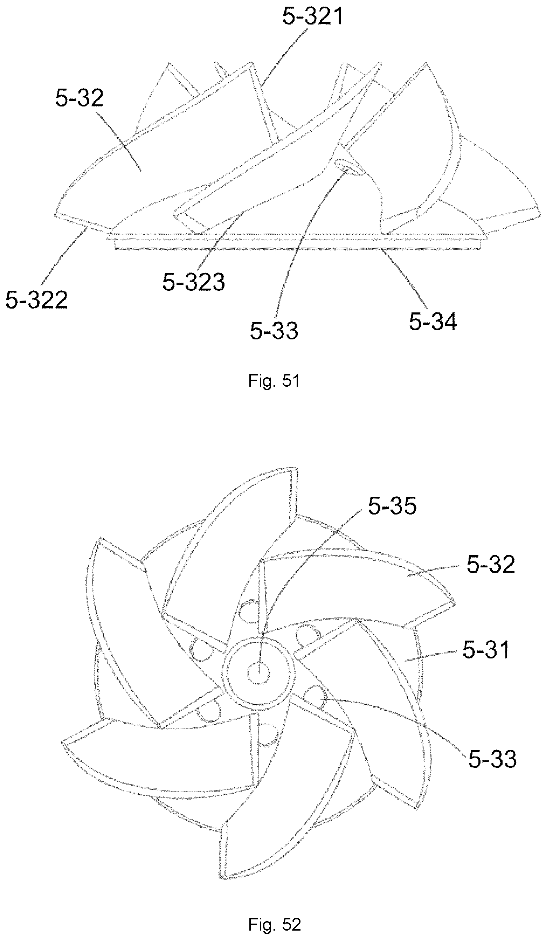

Please refer to Fig. 51 and Fig. 52, in another embodiment of this utility model, air passage holes 5-33 are also formed on the base 5-31 between adjacent blades 5-32. That is, there are also 6 air passage holes 5-33 set close to the axis of the fan blade 5-30. The opening direction of the air passage holes 5-33 is parallel to the axial direction of the fan blade 5-30, used to connect the air inlet 5-111 and the second channel 5-122.

In other words, in this embodiment, the second air flow channel 5-104 is formed by the air passage holes 5-33, the second channel 5-122, the through-hole 5-133, and the flow guide cone 5-22. The extension direction of the second air flow channel 5-104 is parallel to the axial direction of the fan blade 5-30. Thus, of the airflow entering the air intake tube 5-11, one part enters the flow channel formed on the outer peripheral wall of the guide vane 5-131 through the first channel 5-121, while another part flows in through the air passage holes 5-33, enters the guide vane 5-131 and the flow guide cone 5-22 through the second channel 5-122, and finally flows towards the air outlet 5-141.

The base 5-31 also includes an extending edge 5-34 that extends towards the upper duct 5-12. The extending edge 5-34 is set around the base 5-31 and extends away from the blades 5-32. The orthographic projection of the extending edge 5-34 on the upper duct 5-12 partially overlaps with the upper duct 5-12, allowing the extending edge 5-34 to extend into the upper duct 5-12 and connect with the stop of the upper duct 5-12. As the upper duct 5-12 is fixed and does not rotate, the fan blade 5-30 can rotate relative to the upper duct 5-12. Therefore, the extending edge 5-34 can be used to prevent airflow from entering the second air flow channel 5-104 through the gap between the fan blade 5-30 and the upper duct 5-12.

In this embodiment, the handheld hair dryer 5-100 also includes several switches to control the wind speed, start/stop, etc. of the handheld hair dryer 5-100.

As shown in Fig. 45 and Fig. 46, the grip handle 5-6 includes a grip 5-61 and multiple switches integrated on the grip 5-61, with each switch positioned differently on the grip 5-61.

Specifically, a first switch 5-611 is set on the top of the grip 5-61, used to control the wind speed; a second switch 5-612 is set on the side wall of the grip 5-61, used to control the constant speed air output of the handheld hair dryer 5-100; a third switch 5-613 is set at the bottom of the grip 5-61, used to control the start/stop of the handheld hair dryer 5-100. The first switch 5-611, the second switch 5-612, and the third switch 5-613 are independent of each other. In other embodiments, their positions and functions can be adjusted according to actual needs, which is not limited here.

A fourth switch 5-614 is also set on the air outlet tube 5-14, used to fix the air outlet tube 5-14, making it detachably connected with the housing assembly 5-5. When the fourth switch 5-614 is pressed, the air outlet tube 5-14 can be detached from the housing assembly 5-5.

In summary, the handheld hair dryer 5-100 of this utility model uses a mixed-flow fan blade. The external airflow enters parallel to the axial direction from the air inlet 5-111, and after the fan blade 5-30 rotates, the airflow flows at a certain angle to the axial direction along the upper duct 5-12, then flows back parallel to the axial direction along the lower duct 5-13, achieving the guidance of the airflow direction. That is, the mixed-flow fan blade 5-30 of this utility model makes the flowing air have both axial and radial components. By setting up a duct assembly connected to the air intake tube 5-11, the first channel 5-121 on the duct assembly can communicate with the first air flow channel 5-103 inside the blowing assembly 5-1, and the second channel 5-122 on the duct assembly can communicate with the second air flow channel 5-104 inside the blowing assembly 5-1, thereby allowing part of the airflow entering the blowing assembly 5-1 to pass through the motor 5-20 along the second air flow channel 5-104, improving the heat dissipation effect of the motor 5-20.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the present invention and examples have been fully described with reference to the accompanying drawings, it is to be noted that various changes and modifications will become apparent to those skilled in the art. Such changes and modifications are to be understood as being included if they are within the scope of the appended claims.

## Claims

1. A blower apparatus, comprising:
a blower housing (605), wherein the blower housing (605) has an air inlet (606) and an air outlet (607);
a motor (604);
a blade base (603), driven by the motor (604) to rotate along a base axis (612) for carrying air from the air inlet (606) to the air outlet (607); and
a plurality of fan blades (601) extending from the blade base (603), wherein each fan blade (601) comprises multiple edges, wherein a first edge (602) is closest to the base axis (612), wherein a second edge (621) connects the first edge (602) and a third edge (622), wherein the third edge (622) is farthest from the base axis (612), and wherein an angle (613) between the first edge (602) of the fan blade (601) and the base axis (612) is equal to or less than 80 degrees.

2. The blower apparatus of claim 1, wherein the blower housing (605) comprises a first air path (615) and a second air path (608), wherein the first air path (615) and the second air path (608) are configured to carry air from the air inlet (606) to the air outlet (607), the first air path (615) carries more air than the second air path (608), and wherein the second air path (608) is configured to cool the motor (604).

3. The blower apparatus of claim 2, wherein the motor (604), the blade base (603), and the plurality of fan blades (601) are disposed inside the blower housing (605) (605), wherein the plurality of fan blades (605) and the blade base (603) are positioned facing the air inlet (606).

4. The blower apparatus of claim 3, wherein the blower housing (605) comprises an air inlet pipe (611) and an air outlet pipe (648), wherein the air inlet (606) is disposed on the air inlet pipe (611) and the air outlet (607) is disposed on the air outlet pipe (648), wherein an upper duct (641) and a lower duct (642) are provided between the air inlet pipe (611) and the air outlet pipe (648), wherein the upper duct (641) is connected to the air inlet pipe (611) and comprises a first passage (643) communicating with the first air path (615) and a second passage (644) communicating with the second air path (608), and wherein the first passage (643) is formed around the outer periphery of the second passage (644).

5. The blower apparatus of claim 4, wherein the upper duct (641) is conically shaped and gradually tapers toward the air inlet (606), and wherein the lower duct (642) is conically shaped and gradually tapers toward the air outlet (607).

6. The blower apparatus of claim 4, wherein a ratio of a radial length of the first air path (615) within the upper duct (641) to an outer diameter of the fan blades (601) is greater than 0.05, and wherein a ratio of a diameter of the air outlet (607) to the outer diameter of the fan blades (601) is greater than 0.15.

7. The blower apparatus of claim 4, wherein a minimum distance between an outer edge of the fan blades (601) and an inner wall surface of the air inlet pipe (611) is between 0.3 mm and 3 mm.

8. The blower apparatus of claim 4, wherein an outer side of the motor (604) is encased by a sleeve (650), wherein the sleeve (650) is housed within the lower duct (642), wherein the second air path (608) is formed between the sleeve (650) and the motor (604), wherein a guiding cone (651) is connected to the side of the lower duct (642) facing the air outlet (607), wherein a radius of the guiding cone (651) gradually decreases in the airflow direction of the second air path (608), wherein the guiding cone (650) is provided with an opening for airflow to exit, and wherein the first air path (615) and the second air path (608) communicate at the opening.

9. The blower apparatus of claim 8, wherein the blade base (603) is provided with air passage holes (609) located between adjacent fan blades (601), wherein the air passage holes (609) are configured to connect the air inlet (606) to the second passage (644).

10. The blower apparatus of claim 9, wherein the second air path (608) is formed by the air passage holes (609), the second passage (644), the sleeve (650), and the guiding cone (651), wherein an extending direction of the second air path (608) is parallel to an extending direction of an output shaft of the motor (604).

11. The blower apparatus of claim 9, wherein the blade base (603) further comprises an extending edge (1-34; 5-34) that extends toward the upper duct (1-12; 5-12), wherein an orthogonal projection of the extending edge (1-34; 5-34) onto the upper duct (1-12; 5-12) partially overlaps with the upper duct (1-12; 5-12), such that the extending edge (1-34; 5-34) extends into the upper duct (1-12; 5-12) and is connected to a stop surface of the upper duct (1-12; 5-12).

12. The blower apparatus of claim 8, wherein the second air path (608) comprises a first portion and a second portion, wherein the first portion is located between the blade base (603) and the upper duct (641) and is perpendicular to an output shaft of the motor (604), wherein the second portion is formed by the second passage (644), the sleeve (650), and the guiding cone (651), and wherein the first portion and the second portion communicate at the second passage (644).

13. The blower apparatus of claim 12, wherein a distance between the blade base (603) and the upper duct (641) is greater than or equal to 2 mm.

14. The blower apparatus of claim 1, further comprising a backplate (4-4) and a power supply assembly, wherein the backplate (4-4) comprises a mounting slot, wherein the blower housing (605) is at least partially mounted in the mounting slot, wherein the power supply assembly is mounted on the backplate (4-4) to supply power to the motor (604), and wherein the backplate (4-4) is configured to be worn by a user and is positioned against the user's back.

15. The blower apparatus of claim 1, further comprising a wireless receiver, and a rotation motor, wherein the blower housing (605) is mountable on a vehicle via a mounting bracket, wherein the wireless receiver is configured to receive a wireless command to drive the rotation motor to adjust a direction of the air outlet (607).

16. The blower apparatus of claim 15, further comprising a wireless controller, wherein the wireless controller is configured to be operated by a user to send the wireless command to the wireless receiver, and
the wireless controller is fixedly mounted on a control handle of the vehicle via a clamp.
